# EUROPÄISCHE PATENTSCHRIFT

(11) **EP 1 033 035 B1**
(45) Veröffentlichungstag und Bekanntmachung des Hinweises auf die Patenterteilung: **17.10.2001**
(21) Anmeldenummer: 98962361.6
(22) Anmeldetag: 19.11.1998
(51) Int. Cl.: H04N 5/262

(54) **EINHEIT UND VERFAHREN ZUM TRANSFORMIEREN UND SICHTBARMACHEN VON AKUSTISCHEN SIGNALEN**
UNIT AND METHOD FOR TRANSFORMING AND DISPLAYING ACOUSTIC SIGNALS
UNITE ET PROCEDE POUR TRANSFORMER ET AFFICHER DES SIGNAUX ACOUSTIQUES

(30) Priorität: 19.11.1997 DE 19751290
(43) Veröffentlichungstag der Anmeldung: 06.09.2000
(73) Patentinhaber: X.IST Realtime Technologies GmbH, 50354 Hürth (DE)
(72) Erfinder: SCHIRM, Olaf, D-50939 Köln (DE)
(74) Vertreter: Grape, Knut, Dipl.-Ing.
(86) Internationale Anmeldenummer: EP9807430
(87) Internationale Veröffentlichungsnummer: WO9926412

(56) Entgegenhaltungen:
- WO-A-94/22128
- DE-A- 3 816 545
- DE-C- 19 503 411
- US-A- 5 048 390
- US-A- 5 439 170
- US-A- 5 557 424

## Beschreibung

Die Erfindung betrifft eine Einheit und ein Verfahren zum graphischen Ausgestalten von Bildern und zum Aktivieren von in den Bildern vorgesehenen, im wesentlichen unbewegten Objekten mittels akustischer Signale.

Es sind derzeit Trägermedien auf dem Markt erhältlich, die über eine Einrichtung zum Abspielen des jeweiligen Trägermediums und einen Bildschirm, sei es in Form eines Fernsehgerätes, sei es in Form eines Monitors eines Personal-Computers, graphisch ausgestaltete Bilder und in den Bildern vorgesehene, unbewegte und/oder bewegte Objekte darstellen. In diesem Zusammenhang sind beispielsweise Videokasetten als Trägermedien genannt. Die graphisch ausgestalteten Bilder und die in den Bildern vorgesehenen, unbewegten und/oder bewegten Objekte lassen sich allerdings nicht während der Darstellung bzw. des Abspielens des jeweiligen Trägermediums von seitens des Betrachters verändern. Eine Veränderung der graphisch ausgestalteten Bilder und der in den Bildern vorgesehenen unbewegten und/oder bewegten Objekte läßt sich allenfalls im Rahmen einer dem Abspielen vorausgehenden redaktionellen Änderung des gesamten. Trägermediums, zum Beispiel durch Unterlegung einer anderen Farbe, durch Herausschneiden bestimmter Szenen etc., bewirken. Eine solche Veränderung allerdings bleibt wiederum so lange erhalten, bis der Betrachter eine erneute Umarbeitung des Trägermediums vor dessen Abspielen vornimmt. Des weiteren sind auf dem Markt zum Beispiel Computerspiele bekannt, die bestimmte graphisch ausgestaltete Bilder erzeugen, in welchen Objekte vorhanden sind, die sich mit sogenannten Joy-Sticks innerhalb des Bildes nach oben bzw. nach unten und nach rechts bzw. nach links verschieben, versetzen oder in sonstiger Weise bewegen lassen, um bestimmten Hindernissen, künstlich erzeugten Gefahrensituationen etc. ausweichen zu können. Demgegenüber sind Einheiten und Verfahren zum graphischen Ausgestalten von Bildern und zum Aktivieren von in den Bildern vorgesehenen, im wesentlichen unbewegten Objekten mittels akustischer Signale im Stand der Technik nicht bekannt.

Darüber hinaus beschreibt die WO 94/22128 ein System zum Transformieren von akustischen Signalen in, insbesondere visuell wahrnehmbare, Ereignisse. Dieses System umfaßt eine Vorrichtung zum Empfangen der akustischen Signale, deren Ausgang mit einem A/D-Wandler kommuniziert. Der A/D-Wandler ist mit einer Vorrichtung zum Verarbeiten der empfangenen akustischen, digitalen Signale verbunden. Dort können die digitalen Signale unter Verwendung einer schnellen Fouriertransformierten analysiert werden. Eine graphische Verarbeitungsvorrichtung transformiert sodann Videobilder, welche aus einem Videospeicher geladen werden, und zwar in Abhängigkeit der analysierten akustischen Signale. Der Ausgang der graphischen Verarbeitungsvorrichtung wird an eine Displayvorrichtung angelegt, welche die transformierten graphischen Bilder über eine oder mehrere Anzeigeeinrichtungen sichtbar macht. Dieses System basiert dabei allerdings auf einer Funktionsweise, welche eine nur sehr beschränkte Transformation von akustischen Signalen in visuell wahrnehmbare Ereignisse ermöglicht. Damit einhergehend läßt sich lediglich eine verhältnismäßig begrenzte Einsatzmöglichkeit dieses bekannten Systems bzw. des damit zusammenhängenden. Verfahrens erreichen.

Ausgehend vom Stand der Technik liegt der Erfindung die Aufgabe zugrunde, eine Einheit und ein Verfahren zum graphischen Ausgestalten von Bildern und zum Aktivieren von in den Bildern vorgesehenen, im wesentlichen unbewegten Objekten mittels akustischer Signale bereitzustellen, welche unter anderem die vorgenannten Nachteile vermindert bzw. beseitigt, mithin konstruktiv besonders einfach ausgestaltet ist und Objekte beliebiger Art sowie auf zuverlässige Weise mittels akustischer Signale aktivieren kann.

Diese Aufgabe wird in vorrichtungstechnischer Hinsicht durch die Merkmale des Anspruchs 1 gelöst.

Demnach umfaßt die erfindungsgemäße Einheit zum graphischen Ausgestalten von Bildern und zum Aktivieren von in den Bildern vorgesehenen, im wesentlichen unbewegten Objekten mittels akustischer Signale eine Vorrichtung zum Empfangen der akustischen Signale und zum Verarbeiten der empfangenen akustischen Signale sowie eine damit kommunizierende Vorrichtung zum Lesen und Bearbeiten der von der Empfangs- und Verarbeitungsvorrichtung gelieferten Signale und von auf einem Trägermedium enthaltenen Informationen, die mit einem Bildschirm, einer Leinwand oder dergleichen zum Darstellen der graphisch ausgestalteten Bilder und der in den Bildern vorgesehenen, aktivierten Objekte verbunden ist, wobei die Empfangs- und Verarbeitungsvorrichtung eine Einrichtung zum Zerlegen der abgetasteten Signale in Frequenzkomponenten über ein Zeitintervall und eine Einrichtung zur Auswertung der abgetasteten Signale zum Erhalt von Amplitudenwerten über ein Zeitintervall sowie eine Einrichtung zum Selektieren und/oder Zuordnen der Frequenzkomponenten und der Amplitudenwerten zu Kombinationswerten daraus und unter Verwendung von auf einem Trägermedium enthaltenen Informationen, die in bestimmte Audioereignissen entsprechende Signale bemuster- und transformierbar sind, umfaßt.

Durch eine solche Ausgestaltung der Einheit nach der Erfindung ist es auf besonders einfache, zugleich aber sehr zuverlässige Weise möglich, graphisch ausgestaltete Bilder mittels akustischer Signale zu verändern und in den Bildern vorhandene, im wesentlichen unbewegte Objekte jeglicher Art zu aktivieren.

Vorteilhafte vorrichtungstechnische Maßnahmen sind in den Ansprüchen 2 bis 12 beschrieben.

Von besonderer Bedeutung für eine insbesondere kostengünstige Ausgestaltung der erfindungsgemäßen Vorrichtung sind die Merkmale der Ansprüche 9 und 10, wonach die Lese- und Verarbeitungsvorrichtung als Personal-Computer mit einer Dateneinleseeinheit, insbesondere einem CD-Laufwerk, einem DVD-Laufwerk oder einer auf elektronische Weise realisierten Dateneinleseeinheit, bzw. als Station für Spiele interaktive Anwendungen, Lernprogramme etc. ausgebildet ist. Auf diese Weise können bereits vorhandene Geräte und Anlagen von Benutzern in die erfindungsgemäße Vorrichtung integriert und somit zusätzliche Kosten vermieden werden.

Des weiteren wird diese Aufgabe in verfahrenstechnischer Hinsicht durch die Merkmale des Anspruchs 13 gelöst.

Demnach umfaßt das erfindungsgemäße Verfahren zum Transformieren von akustischen Signalen (ASL, ASR) in, insbesondere visuell wahrnehmbare, Ereignisse folgende Schritten:
aa) Empfangen der akustischen Signale (ASL, ASR), in einer Vorrichtung (12) zum Empfangen der akustischen Signale (ASL, ASR) und zum Verarbeiten der empfangenen akustischen Signale (ASL, ASR),
bb) Digitalisieren der empfangenen Signale aus Schritt aa) in einer Einrichtung (36),
cc) Zerlegen der Signale aus Schritt bb) in einer Einrichtung (38) zur Zerlegung der Signale in Frequenzkomponenten (A, B, C, D, ..., X) über ein Zeitintervall und/oder Auswerten der Signale aus Schritt bb) in einer Einrichtung (38a) zum Erhalt von Amplitudenwerte (A', B', C', D', ..., X') über ein Zeitintervall,
dd) Selektieren und/oder Zuordnen von Frequenzkomponenten (A, B, C, D, ..., X) und/oder Amplitudenwerten (A', B', C', D', ..., X') zu Kombinationswerten (K1, K2, K3, K4, ..., KX) daraus und unter Verwendung von auf einem Trägermedium (16) enthaltenen Informationen,
ee) Bemustern und Transformieren der Kombinationswerte (K1, K2, K3, K4, ..., KX) aus Schritt dd) in bestimmten Audioereignissen entsprechende Signale (AE1, AE2, AE3, AE4, ..., AEx, AENull) in einer Vorrichtung (14) zum Lesen und Verarbeiten der Signale (AE1, AE2, AE3, AE4, ..., AEx, AENull) unter Verwendung der Informationen des Trägermediums (16),
ff) Auswählen und Kombinieren von bestimmten den Audioereignissen entsprechenden Signalen (AE1, AE2, AE3, AE4, ..., AEx, AENull) aus Schritt ee) unter Verwendung der Informationen des Trägermediums (16) zum Erhalt von bestimmten Weltereignissen entsprechenden Signalen (WE1, WE2, WE3, WE4, ..., WEx),
gg) Zuordnen von bestimmten den Weltereignissen entsprechenden Signalen (WE1, WE2, WE3, WE4, ..., WEx) aus Schritt ff) zu vorbestimmten Objekten bzw. Ereignissen unter Verwendung der Informationen des Trägermediums (16),
hh) Aktivieren der vorbestimmten Objekte bzw. Ereignisse durch Ausführen der den bestimmten Weltereignissen entsprechenden Signale (WE1, WE2, WE3, WE4, ..., WEx) aus Schritt gg),
ii) Verändern des jeweiligen Zustandes der aktivierten Objekte bzw. Ereignisse, und
jj) Wiederholen der Schritte hh) und ii) bis sämtliche vorbestimmten Objekte bzw. Ereignisse aktiviert und verändert wurden, die für ein bestimmtes Zeitintervall definiert sind.

Durch eine solche Ausgestaltung des Verfahrens nach der Erfindung wird eine einfache, gleichzeitig aber kostengünstige Veränderung von vorgegebenen Bildern mit darin enthaltenen, im wesentlichen unbewegten- Objekte ermöglicht. Auf diese Weise ist es zusätzlich möglich, eine noch genauere Analyse und damit Einordnung der akustischen Signale vorzunehmen. So kann durch die Amplitudenwerte bzw. Lautstärkewerte beispielsweise ausgesprochen exakt zwischen einander entsprechenden Tönen verschiedener Musikinstrumente, zum Beispiel zwischen einem tiefen Ton einer Geige und demjenigen einer Trommel, unterscheiden werden. Es kann daher ohne weiteres ein Rhytmuswechsel bezüglich der akustischen Signale und damit einhergehend sogar ein bestimmter Musikstil erkannt werden, und zwar mit/oder ohne Vergleich zu bereits gegebenenfalls gespeicherten Rhytmen bzw. Musikstilen. Dies wiederum führt zu einer weiteren Verbesserung und Diversifizierung in der Umsetzung der akustischen Signale in visuell oder optisch wahrnehmbare Ereignisse nach der Erfindung.

Vorteilhafte Ausgestaltungen des erfindungsgemäßen Verfahrens sind in den Ansprüchen 14 bis 24 beschrieben.

Weitere Merkmale, Vorteile und Einzelheiten der Erfindung ergeben sich aus der nachfolgenden Beschreibung einer bevorzugten Ausführungsform der Erfindung sowie anhand der Zeichnung. Hierbei zeigen:
- Fig. 1: eine schematische Darstellung einer Ausführungsform einer erfindungsgemäß ausgebildeten Einheit,
- Fig. 2: eine schematische Ansicht einer Ausführungsform einer Empfangs- und Verarbeitungsvorrichtung der erfindungsgemäß ausgebildeten Einheit nach Fig. 1,
- Fig. 3: ein Ablaufdiagramm zur Darstellung eines Grundprinzips eines erfindungsgemäßen Verfahrens beim Starten der erfindungsgemäßen Einheit,
- Fig. 4: ein Ablaufdiagramm zur schematischen Darstellung von Einzelheiten des erfindungsgemäß ausgebildeten Verfahrens, das in der erfindungsgemäßen Ausführungsform der Empfangs- und Verarbeitungsvorrichtung nach den Fig. 1 und 2 stattfindet,
- Fig. 5a bis 5d: ein Ablaufdiagramm zur schematischen Darstellung weiterer Einzelheiten des erfindungsgemäß ausgebildeten Verfahrens, das in der erfindungsgemäßen Ausführungsform der Lese- und Verarbeitungsvorrichtung nach den Fig. 1 und 2 stattfindet,
- Fig. 6: ein Ablaufdiagramm zur schematischen Darstellung von Einzelheiten des erfindungsgemäß ausgebildeten Verfahrens in der Fig. 5c,
- Fig. 7: eine schematische Ansicht eines Beispiels zur Darstellung eines graphisch ausgestalteten Bildes bzw. zur Aktivierung eines in dem Bild vorgesehenen aktivierten Objektes,
- Fig. 8: eine schematische Ansicht einer anderen Ausführungsform einer Empfangs- und Verarbeitungsvorrichtung der erfindungsgemäß ausgebildeten Einheit nach Fig. 1 entsprechend der Fig. 2,

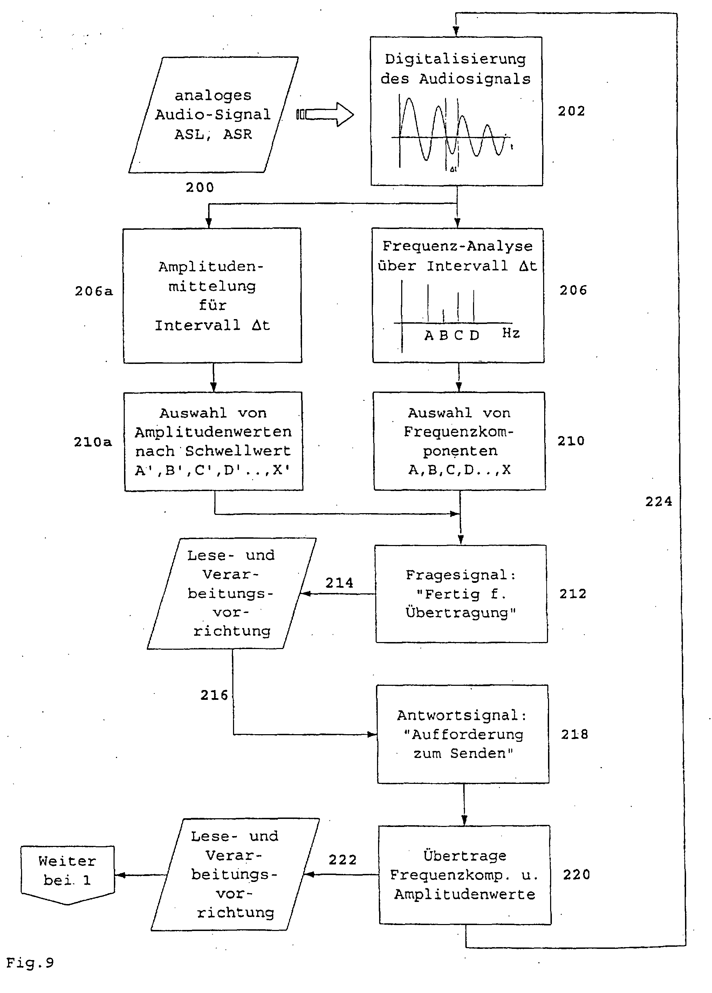

- Fig. 9: ein Ablaufdiagramm zur schematischen Darstellung von Einzelheiten des erfindungsgemäß ausgebildeten Verfahrens, das in der erfindungsgemäßen Ausführungsform der Empfangs- und Verarbeitungsvorrichtung nach den Fig. 1 und 8 entsprechend der Fig. 4 stattfindet, und
- Fig. 10a: ein Ablaufdiagramm zur schematischen Darstellung weiterer Einzelheiten des erfindungsgemäß ausgebildeten Verfahrens, das in der erfindungsgemäßen Ausführungsform der Lese- und Verarbeitungsvorrichtung nach den Fig. 1 und 8 entsprechend der Fig. 5a stattfindet.

Bei der nachfolgenden Beschreibung von verschiedenen Ausführungsbeispielen erfindungsgemäßer Einheiten 10 sind einander entsprechende, gleiche Bauteile und/oder Elemente jeweils mit identischen Bezugsziffern versehen.

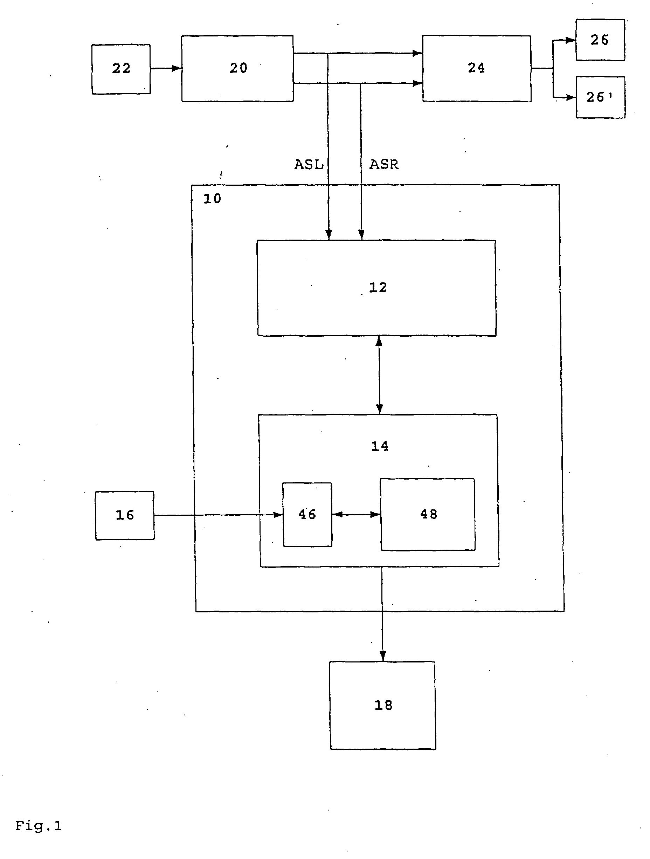

In der Fig. 1 ist schematisch eine Einheit 10 zum graphischen Ausgestalten von Bildern und zum Aktivieren von in den Bildern vorgesehenen, im wesentlichen unbewegten Objekten mittels akustischer Signale ASL, ASR nach der Erfindung dargestellt.

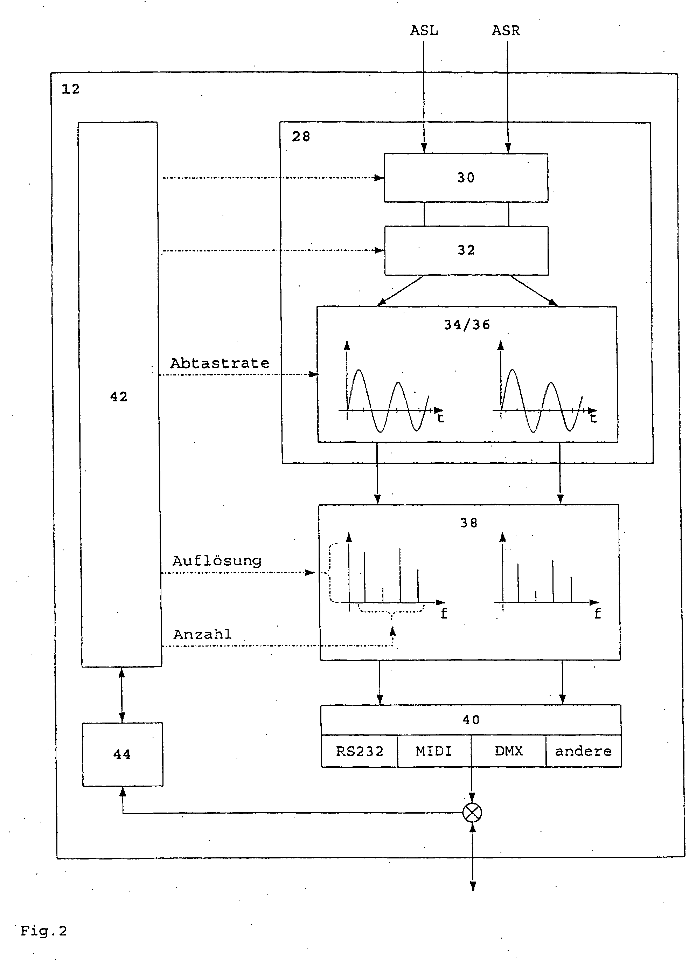

Die Einheit 10 umfaßt eine Vorrichtung 12 zum Empfangen der akustischen Signale ASL, ASR und zum Verarbeiten der empfangenen akustischen Signale ASL, ASR. Die Empfangs- und Verarbeitungsvorrichtung 12 wird im folgenden noch anhand der Fig. 2 näher beschrieben.

Des weiteren weist die Einheit 10 eine Vorrichtung 14 zum Lesen und Verarbeiten der von der Empfangs- und Verarbeitungsvorrichtung 12 gelieferten Signale und von Informationen, die auf einem Trägermedium 16 enthalten sind, auf. Mithin kommunizieren die Empfangs- und Verarbeitungsvorrichtung 12 und die Lese- und Verarbeitungsvorrichtung 14 miteinander.

Die Lese- und Verarbeitungsvorrichtung 14 wiederum ist mit einem Bildschirm 18 zum Darstellen der graphisch ausgestalteten Bilder und der in den Bildern vorgesehenen, aktivierten Objekte verbunden.

Der Empfangs- und Verarbeitungsvorrichtung 12 der erfindungsgemäßen Einheit 10 ist eine Einrichtung 20 zum Abspielen von auf einem Trägermedium 22 enthaltenen Audio-Informationen in Form von Musik, Sprechgesang, gesprochenen Worten etc. vorgeschaltet. Bei der Abspieleinrichtung 20 und dem entsprechenden Trägermedium 22 kann es sich beispielsweise um eine HIFI-Anlage mit angeschlossenem CD-Laufwerk, Kassettenlaufwerk, Tonbandabspielgerät, Schallplattenspieler oder dergleichen handeln, dessen Ausgang einerseits an den Eingang der Empfangs- und Verar-beitungsvorrichtung 12 und andererseits an den Eingang eines herkömmlichen Musikverstärkers 24 mit Lautsprechern 26, 26', angelegt ist.

Bei dem Ausführungsbeispiel gemäß der Fig. 2 gelangen die von der Abspieleinrichtung 20 gelieferten akustischen Signale ASL, ASR, die an den Eingang der Empfangs- und Verarbeitungsvorrichtung 12 angelegt sind, zunächst in eine Einrichtung 28 zur Pegelangleichung und A/D-Wandlung. Die Pegelangleichungs- und A/D-Wandlungseinrichtung 28 umfaßt in dem in der Fig. 2 dargestellten Ausführungsbeispiel einen Verstärker 30 und einen Filter 32 zur Pegelangleichung sowie eine Einrichtung 36 zum Digitalisieren der empfangenen akustischen, zwischenzeitlich aufbereiteten Signale ASL, ASR in Form eines A/D-Wandlers vorgesehen.

Von der Einrichtung 36 digitalisierte Signale wiederum werden entsprechend der Fig. 2 an eine Einrichtung 38 angelegt, welche die digitalisierten Signale in einzelne Frequenzkomponenten A, B, C, D, ..., X, beispielsweise mittels Fourier-Analyse über die mit Δt, mittels Wavelet-Analyse oder dergleichen, zerlegt. Die Signalzerlegungseinrichtung 38 ist dabei ein wesentlicher Bestandteil der Empfangs- und Verarbeitungsvorrichtung 12 der erfindungsgemäßen Einheit 10.

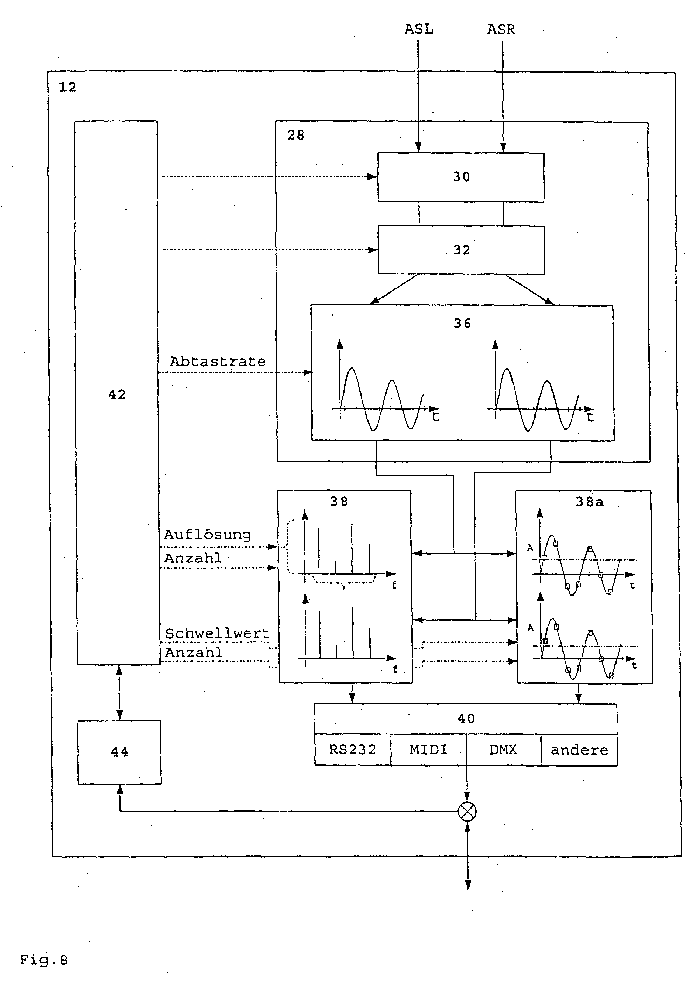

Kumulativ oder durchaus auch alternativ dazu werden die digitalisierten Signale bei der Ausführungsform nach der Fig. 8 von der Einrichtung 36 an eine Einrichtung 38a angelegt, welche die digitalisierten Signale zu gemittelten Amplitudenwerten bzw. Lautstärkewerten A', B', C', D', ..., X' für ein Zeitintervall auswertet. Die Amplitudenauswertungseinrichtung 38a ist dabei ebenfalls ein wesentlicher Bestandteil der Empfangs- und Verar-beitungsvorrichtung 12 der erfindungsgemäßen Einheit 10.

Die von der Signalzerlegungseinrichtung 38 erzeugten einzelnen Frequenzkomponenten A, B, C, D, ..., X und/oder von der Amplitudenauswertungseinrichtung 38a ermittelten Amplitudenwerte bzw. Lautstärkewerte A', B', C', D', ..., X' werden anschließend an einen Protokollgenerator 40 angelegt und über diesen, insbesondere in einer auf die Lese- und Verarbeitungsvorrichtung 14 abgestimmten, lesbaren Form, weitergeleitet. Der Protokollgenerator 40 erstellt dabei ein Kommunikationsprotokoll in genauer Abstimmung mit der jeweils zum Einsatz kommenden Lese- und Verarbeitungsvorrichtung 14, beispielsweise in der Übertragungsnorm RS232 für (Personal-)Computer, Multi-IO für herkömmliche Playstationen, MIDI für Musiksynthesizer oder DMX für Lichtsteueranlagen von Diskotheken etc..

Zusätzlich umfaßt die Empfangs- und Verarbeitungsvorrichtung 12 schließlich noch eine Datenverarbeitungseinheit 42 und einen Bootloader 44. Die Datenverarbeitungseinheit 42 kommuniziert mit dem Bootloader 44, welcher beim Starten der Einheit 10 mit wenigstens einem Teil der auf dem Trägermedium 16 enthaltenen Informationen und Daten versorgbar ist, und steuert die Pegelangleichungs- und A/D-Wandlungseinrichtung 28, die Signalzerlegungseinrichtung 38, die Amplitudenauswertungseinrichtung 38a und den Protokollgenerator 40. Dementsprechend bestimmt die Datenverarbeitungseinheit 42 beispielsweise die Abtastrate der Abtasteinrichtung 36 oder die Anzahl und Auflösung der einzelnen Frequenzkomponenten A, B, C, D, ..., X und/oder die Anzahl und den Schwellwert der einzelnen Amplitudenwerte A', B', C', D', ..., X'.

Wie aus der Fig. 1 deutlich hervorgeht, umfaßt die Lese- und Verarbeitungsvorrichtung 14 unter anderem eine Einrichtung 46 zum Lesen der auf dem Trägermedium 16 enthaltenen Informationen und Daten. Die Leseeinrichtung 46 kann dabei als ein Laufwerk, insbesondere ein CD- oder DVD-Laufwerk, ausgebildet sein. Ebenso ist es jedoch denkbar, statt dessen ein System zur elektronischen (permanenten) Datenspeicherung oder dergleichen vorzusehen.

Darüber hinaus weist die Lese- und Verarbeitungsvorrichtung 14 eine Datenverarbeitungseinheit 48 auf, die mit der Leseeinrichtung 46 kommuniziert. Die Datenverarbeitungseinheit 48 ist vorgesehen, um die Frequenzkomponenten A, B, C, D, ..., X, und/oder die Amplitudenwerte A', B', C', D', ..., X', die von der Empfangs- und Verarbeitungsvorrichtung 12 geliefert werden, und die Informationen, die von dem Trägermedium 16 erhalten werden, zu verarbeiten und gegebenenfalls anschließend zu speichern.

Als besonders vorteilhaft hat sich in diesem Zusammenhang in der Praxis herausgestellt, als Lese- und Verarbeitungsvorrichtung 14 einen herkömmlichen Personal-Computer oder auf dem Markt erhältliche Stationen für Spiele oder dergleichen, die von den verschiedensten Herstellern angeboten werden, vorzusehen. Auf diese Weise läßt sich die konstruktive Ausgestaltung der erfindungsgemäßen Einheit 10 vereinfachen, da zumeist bereits vorhandene Bauelemente, wie zum Beispiel ein Personal-Computer, verwendet werden können.

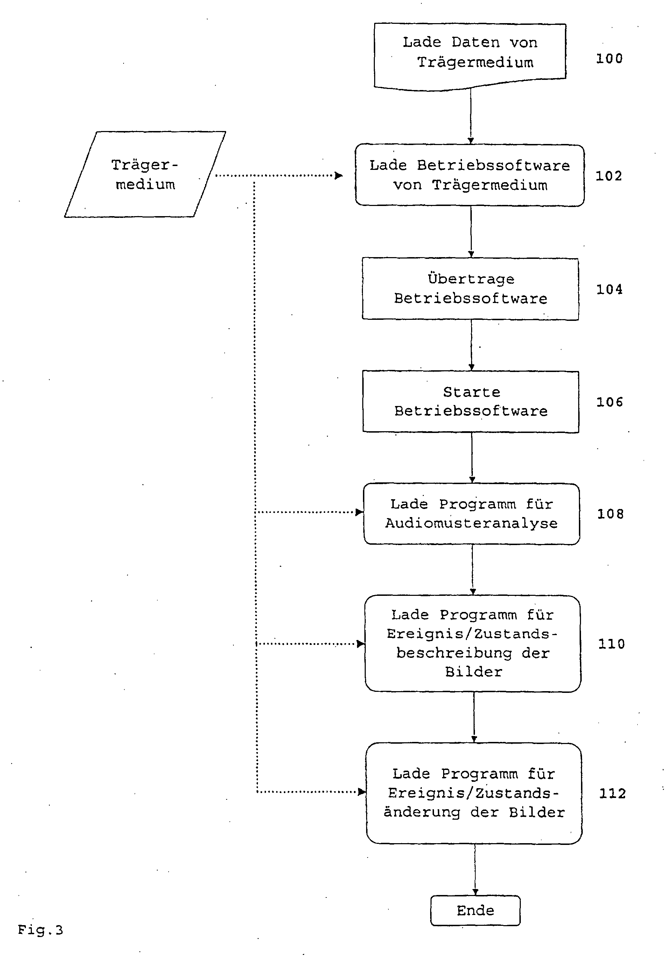

Das Starten der erfindungsgemäßen Einheit 10 zum graphischen Ausgestalten von Bildern und zum Aktivieren von in den Bildern vorgesehenen, im wesentlichen unbewegten Objekten erfolgt entsprechend der Fig. 3 nach folgendem Ablaufschema:

Zunächst wird das Trägermedium 16, wie zum Beispiel eine Compakt-Disk, von der Leseeinrichtung 46 der Lese- und Verarbeitungsvorrichtung 14 aufgenommen. Die auf dem Trägermedium 16 enthaltenen Informationen und Daten werden sodann von dem Trägermedium 16 durch die Leseeinrichtung 46 gelesen und an die Datenverarbeitungseinheit 48 der Lese- und Verarbeitungsvorrichtung 14 übermittelt sowie gemäß Schritt 100 ausgeführt. Unter anderem wird eine Betriebssoftware von dem Trägermedium 16 in die Datenverarbeitungseinheit 48 gemäß Schritt 102 geladen. Die Betriebssoftware wiederum wird von der Datenverarbeitungseinheit 48 der Lese- und Verarbeitungsvorrichtung 14 an die Datenverarbeitungseinheit 42 der Empfangs- und Verarbeitungsvorrichtung 12 über den Bootloader 44 gemäß Schritt 104 übertragen. Die in der Datenverarbeitungseinheit 42 installierte Betriebssoftware wird dann gemäß Schritt 106 gestartet.

Weiterhin wird eine Ausführungssoftware für eine Audiomusteranalyse, die im nachfolgenden noch näher erläutert wird, von dem Trägermedium 16 in die Datenverarbeitungseinheit 48 gemäß Schritt 108 geladen. Hieraufhin wird eine weitere Ausführungssoftware für eine Ereignis-/Zustandsbeschreibung der Bilder und/oder der in den Bildern vorgesehenen, im wesentlichen unbewegten Objekte, die ebenfalls nachfolgend noch näher beschrieben wird, von dem Trägermedium 16 in die Datenverarbeitungseinheit 48 gemäß Schritt 110 geladen. Zuletzt wird noch eine Ausführungssoftware für eine Ereignis-/Zustandsänderung der Bilder und/oder der in den Bildern vorgesehenen, im wesentlichen unbewegten Objekte, die ebenfalls nachfolgend detailliert erläutert wird, von dem Trägermedium 16 in die Datenverarbeitungseinheit 48 gemäß Schritt 112 geladen. Der Vorgang zum Starten und Laden der erfindungsgemäßen Einheit 10 ist danach, wie in Fig. 3 gezeigt, abgeschlossen.

Anschließend kommt das erfindungsgemäße Verfahren zur Anwendung, das im folgenden beschrieben wird:

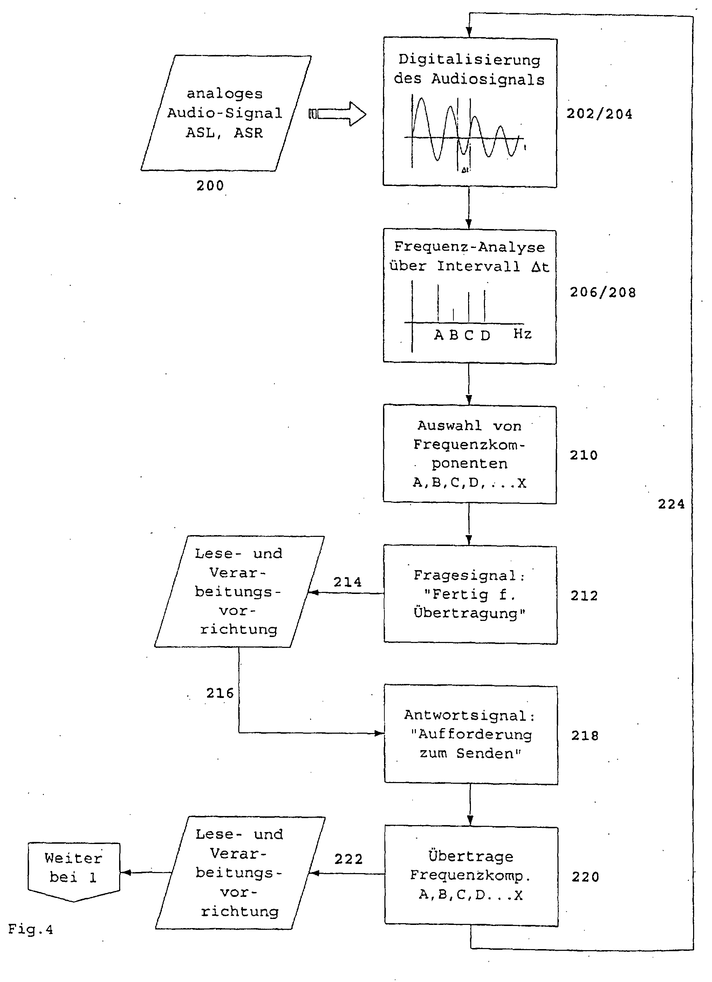

Entsprechend der Fig. 4 werden die akustischen Signale ASL, ASR, die von der Abspieleinrichtung 20 in aller Regel in analogem Zustand erzeugt werden, von der Empfangs- und Verarbeitungsvorrichtung 12 gemäß Schritt 200 empfangen. Die akustischen Signale ASL, ASR werden dabei zunächst einer Pegelangleichungs- und A/D-Wandlungseinrichtung 28 zugeführt, die am Eingang der Empfangs- und Verarbeitungsvorrichtung 12 angeordnet ist. Mittels eines Verstärkers 30 und/oder eines Filters 32 sowie eines A/D-Wandlers 36 der Pegelangleichungs- und A/D-Wandlungseinrichtung 28 werden die akustischen Signale ASL, ASR gemäß Schritt 202 aufbereitet und digitalisiert. Der Verstärker 30, Filter 32 und A/D-Wandler 36 der Pegelangleichungs- und A/D-Wandlungseinrichtung 28 werden dabei von der Datenverarbeitungseinheit 42 eingestellt und gesteuert, beispielsweise durch Vorgabe einer bestimmten Samplerate.

Die abgetasteten Signale wiederum werden bei dem erfindungsgemäßen Verfahren nach der Fig. 4 anschließend einer Signalzerlegungseinrichtung 38 zugeführt und einer Frequenz-Analyse über ein Intervall, beispielsweise einer Fourier-Analyse über die Zeit Δt, einer Wavelet-Analyse oder ähnlichen Analyse, gemäß Schritt 206 unterworfen und in einzelne Frequenzkomponenten bzw. Frequenzbänder A, B, C, D, ..., X gemäß Schritt 206 zerlegt. Auch die Signalzerlegungseinrichtung 38 wird von der Datenverarbeitungseinheit 42 gesteuert. So lassen sich beispielsweise die Anzahl der Frequenzbänder A, B, C, D, ..., X und Auflösung der Frequenzbänder A, B, C, D, ..., X über die Datenverarbeitungseinheit 42 voreinstellen bzw. jederzeit ohne Schwierigkeit verändern.

Das in der Fig. 8 dargestellte Verfahren nach der Erfindung unterscheidet sich lediglich darin, daß die abgetasteten Signale kumulativ oder durchaus auch alternativ zu der Signalzerlegungseinrichtung 38 einer Amplitudenauswertungseinrichtung 38a zugeführt werden. In der Amplitudenauswertungseinrichtung 38a erfolgen gemäß Schritt 206a eine Amplitudenmittelung für ein Intervall, beispielsweise über die Zeit Δt, und gemäß Schritt 210a eine Auswahl von Amplitudenwerten A', B', C', D', ..., X' nach bestimmten minimalen und maximalen Schwellwerten, die zuvor definiert wurden. Auch die Amplitudenauswertungseinrichtung 38a wird von der Datenverarbeitungseinheit 42 gesteuert. So lassen sich beispielsweise die Anzahl der Amplitudenwerte A', B', C', D', ..., X' und die über die Datenverarbeitungseinheit 42 voreinstellen bzw. jederzeit ohne Schwierigkeit abändern.

Die aus dem Schritt 206 und/oder 206a resultierenden Frequenzkomponenten A, B, C, D, ..., X bzw. Amplitudenwerte A', B', C', D', ..., X' werden einem Protokollgenerator 40 zugeleitet, der von den ausgewählten Frequenzkomponenten A, B, C, D, ..., X sodann gemäß Schritt 210 bzw. 210a ein Kommunikationsprotokoll erstellt.

Hieraufhin erzeugt der Protokollgenerator 40 ein Frage- bzw. Protokollsignal gemäß Schritt 212, das an die Lese- und Verar-beitungsvorrichtung 14 gemäß Schritt 214 abgesendet wird. Der Protokollgenerator 40 signalisiert der Lese- und Verarbeitungsvorrichtung 14 auf diese Weise, daß Frequenzkomponenten A, B, C, D, ..., X bzw. Amplitudenwerte A', B', C', D', ..., X' nach deren Erstellung und Ablegung in einem Kommunikationsprotokoll zur Übertragung bereitstehen.

Die Lese- und Verarbeitungsvorrichtung 14 sendet daraufhin gemäß Schritt 216 ein Antwortsignal, das von dem Protokollgenerator 40 gemäß Schritt 218 erwartet wird, an diesen zurück. Sodann wird das Kommunikationsprotokoll mit den gebildeten Frequenzkomponenten A, B, C, D, ..., X bzw. Amplitudenwerte A', B', C', D', ..., X' und mit entsprechenden Übertragungsnormen, die auf die jeweilige konstruktive Ausgestaltung der Lese- und Verarbeitungsvorrichtung 14 abgestimmt ist und somit ein Lesen des von dem Protokollgenerator 40 übersendeten Kommunikationsprotokoll ermöglicht, von dem Protokollgenerator 40 der Empfangs- und Verarbeitungsvorrichtung 12 an die Lese- und Verar-beitungsvorrichtung 14 gemäß Schritt 220, 222 übertragen.

Mit Absendung des Kommunikationsprotokolls durch den Protokollgenerator 40 an die Lese- und Verarbeitungsvorrichtung 14 wird zugleich ein Signal an die Pegelangleichungs- und A/D-Wandlungseinrichtung 28 gemäß Schritt 224 angelegt, um nachfolgende akustische Signale ASL, ASR entsprechend den Schritten 202 bis 222 zur Weiterleitung an die Lese- und Verarbeitungsvorrichtung 14 aufzubereiten.

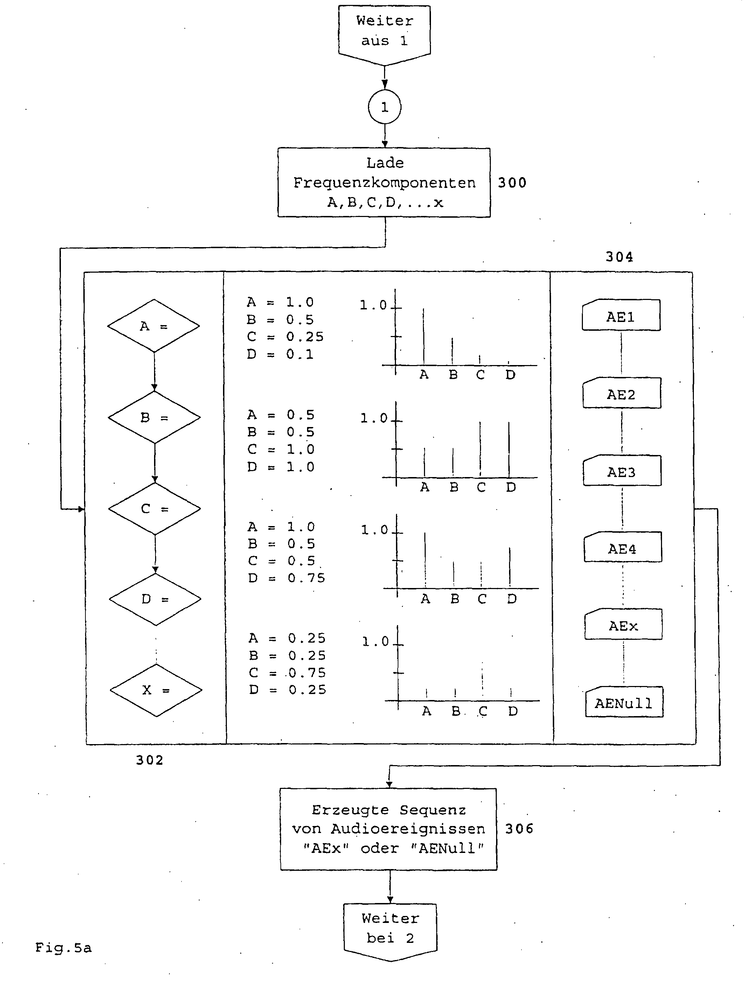

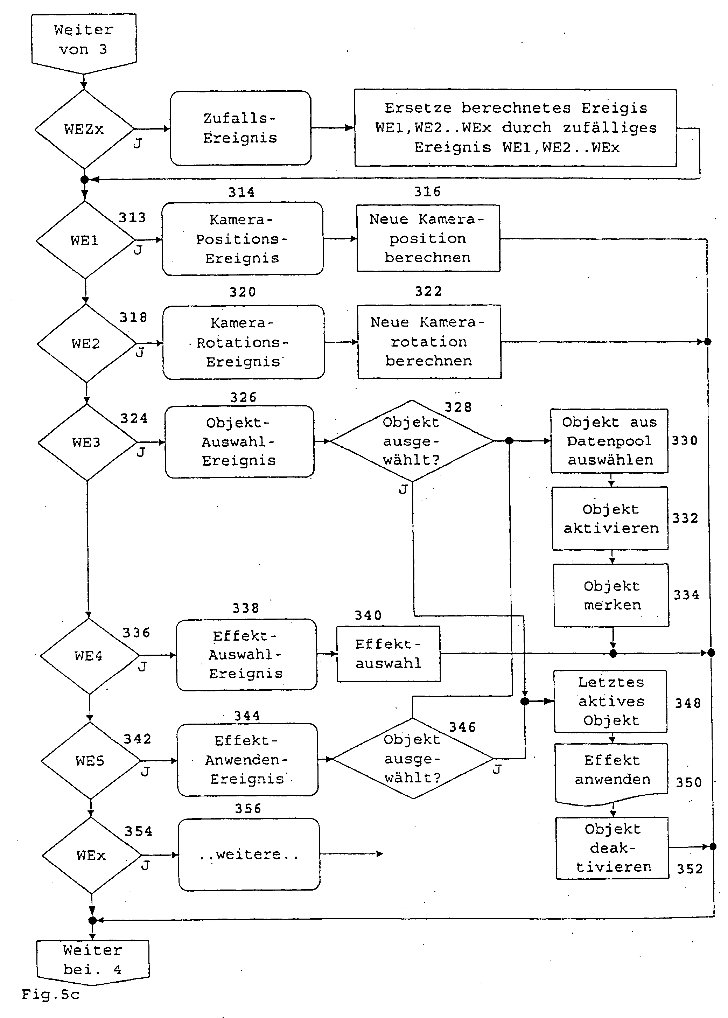

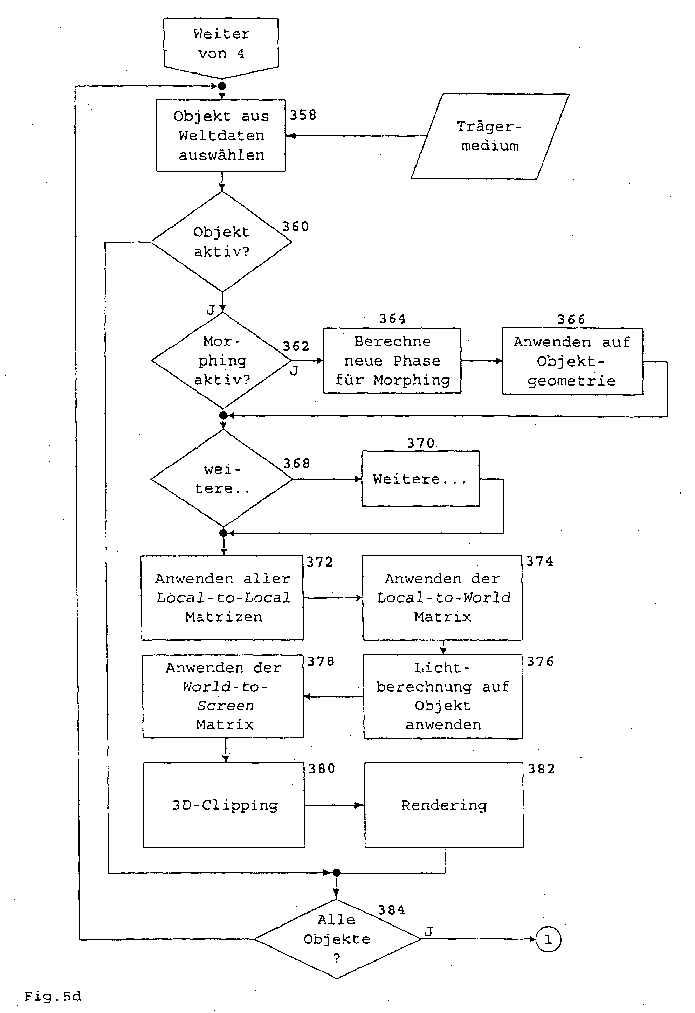

Entsprechend der Fig. 5a werden die übermittelten Frequenzkomponenten A, B, C, D, ..., X dann in die Datenverarbeitungseinheit 48 der Lese- und Verarbeitungsvorrichtung 14 gemäß Schritt 300 geladen.

Die geladenen Frequenzkomponenten A, B, C, D, ..., X werden in der Lese- und Überarbeitungsvorrichtung 14 zunächst gemäß Schritt 302 bemustert bzw. einer Musteranalyse unterzogen. Zu diesem Zweck werden die von der Empfangs- und Verarbeitungsvorrichtung 12 erhaltenen Frequenzkomponenten A, B, C, D, ..., X mit einer Vielzahl von vorbestimmten Mustern verglichen, die als Informationen und Daten auf dem Trägermedium 16 enthalten sind und von der Datenverarbeitungseinheit 48 zum Zwecke des Vergleiches abgerufen werden. Jedes Muster der Vielzahl der vorbestimmten Muster besteht selbst ebenfalls aus einer Reihe von untereinander kombinierten Frequenzkomponenten A, B, C, D, ..., X.

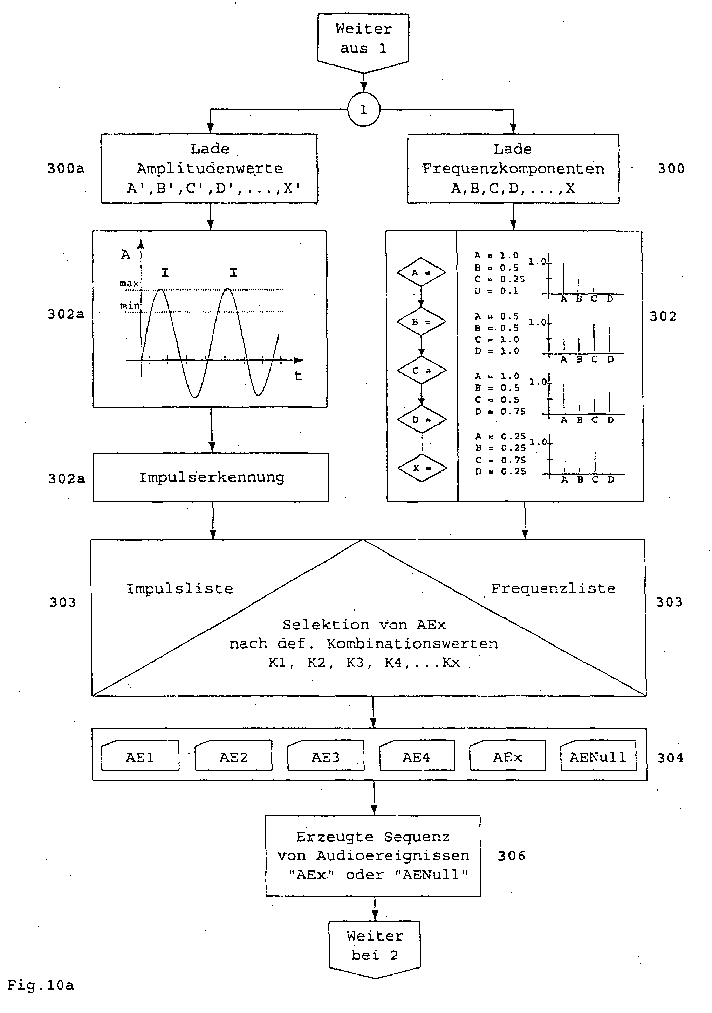

Die Ausführungsform des erfindungsgemäßen Verfahrens entsprechend der Fig. 10a unterscheidet sich demgegenüber lediglich dadurch, daß vorzugsweise zusätzlich zur Ladung der Frequenzkomponenten A, B, C, D, ..., X auch die ermittelten Amplitudenwerte A', B', C', D', ..., X' in die Datenverarbeitungseinheit 48 der Lese- und Verarbeitungsvorrichtung 14 gemäß Schritt 300a geladen werden. Aus den ermittelten Amplitudenwerten A', B', C', D', ..., X' wird die Zeit Δt zwischen zwei Amplitudenmaxima oder -minima gemessen, um einen Impuls bzw. Rhythmus I gemäß Schritt 302a zu erkennen. Diese hieraus resultierende zeitliche Abfolge von Impulsen bzw. eines Rhythmus I wird dann in einer Impulsliste gemäß Schritt 303 abgelegt. Gleichzeitig werden die geladenen und in der Lese- und Überarbeitungsvorrichtung 14 zunächst gemäß Schritt 302 bemusterten bzw. einer Musteranalyse unterzogenen Frequenzkomponenten A, B, C, D, ..., X in einer Frequenzliste gemäß Schritt 303 gespeichert.

Ebenfalls noch in Schritt 303 werden sodann die in der Impulsliste abgelegten Amplitudenwerte A', B', C', D', ..., X' bzw. Impulswerte und die in der Frequenzliste gespeicherten Frequenzkomponenten A, B, C, D, ..., Xe als Kombinationswerte K1, K2, K3, K4, ..., Kx einander zugeordnet. Die Kombinationswerte K1, K2, K3, K4, ..., Kx werden sogleich mit einer Vielzahl von entsprechenden vorbestimmten Mustern verglichen, die als Informationen und Daten auf dem Trägermedium 16 enthalten sind und von der Datenverarbeitungseinheit 48 zum Zwecke des Vergleiches abgerufen werden.

Wenn nun die empfangenen. Frequenzkomponenten A, B, C, D, ..., X entsprechend der Fig. 5a bzw. die erhaltenen Kombinationswerte K1, K2, K3, K4, ..., Kx entsprechend der Fig. 10a beim Vergleich mit einem jeweiligen Muster der Vielzahl von vorbestimmten Mustern aus den Frequenzkomponenten A, B, C, D, ..., X bzw. aus den Kombinationswerten K1, K2, K3, K4, ..., Kx übereinstimmen, werden diese von der Empfangs- und Verarbeitungsvorrichtung 12 gelieferten Frequenzkomponenten A, B, C, D, ..., X bzw. Kombinationswerte K1, K2, K3, K4, ..., Kx in der Lese- und Verarbeitungsvorrichtung 14 in Signale AE1, AE2, AE3, AE4, ..., AEx, welche bestimmten Audioereignissen entsprechen, gemäß Schritt 304 transformiert. Unter dem Begriff "Audioereignisse" werden sämtliche aus den akustischen Signalen ASL, ASR aufbereiteten und resultierenden Frequenzkomponenten A, B, C, D, ..., X, die bestimmte Zustandsänderungen beim graphischen Ausgestalten von Bildern und beim Aktivieren von in den Bildern vorgesehenen, im wesentlichen unbewegten Objekten bewirken, verstanden.

Wenn dagegen eine ausgewählte Folge von Frequenzkomponenten A, B, C, D, ..., X bzw. Kombinationswerten K1, K2, K3, K4, ..., Kx mit keinem der Muster aus der Vielzahl der vorbestimmten Muster übereinstimmt, mithin nicht in ein bestimmtes Audioereignis entsprechendes Signal AE1, AE2, AE3, AE4, ..., AEx transformiert bzw. einem solchen Signal zugeordnet werden kann, wird anstelle dessen wenigstens ein Signal AENull erzeugt, welches mit einem vorbestimmten Audioereignis von vornherein belegt ist. Dieses wenigstens eine Signal AENull stellt sicher, daß in jedem Fall eine kontinuierliche Bearbeitung beim graphischen Ausgestalten des momentanen Bildes und beim Aktivieren von den in dem momentanen Bild vorhandenen, im wesentlichen unbewegten Objekten erfolgt. Mittels eines solchen Platzhaltersignals ist ein Stillstand oder ein daraus sogar resultierender Abbruch beim Bearbeiten auf einfache Weise ausgeschlossen. Die Zuordnung zu AENull wird zufällig bestimmt.

Die den bestimmten Audioereignissen entsprechenden Signale AE1, AE2, AE3, AE4, ..., AEx und gegebenenfalls das wenigstens eine Signal AENull werden gemäß Schritt 306 in eine Reihe aufeinanderfolgend angeordnet.

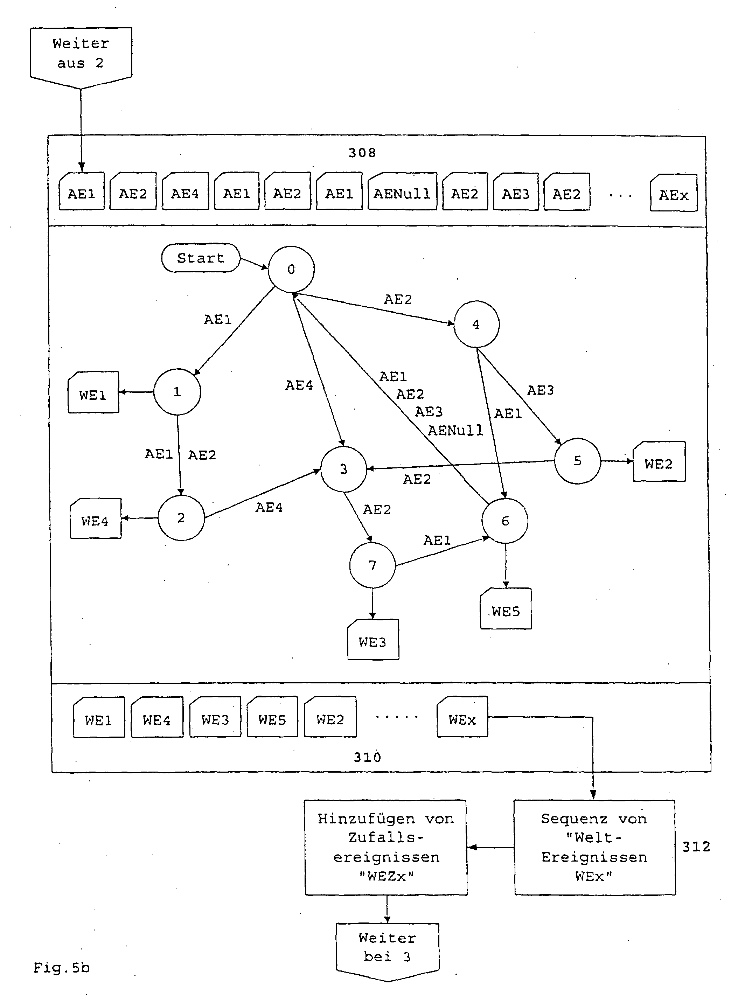

Wie in der Fig. 5b schematisch dargestellt ist, werden die in einer Sequenz angeordneten, den Audioereignissen entsprechenden Signale AE1, AE2, AE3, AE4, ..., AEx, AENull aufeinanderfolgend unter Verwendung der Informationen des Trägermediums 16 gemäß Schritt 308 ausgewählt und kombiniert, um bestimmten Weltereignissen entsprechende Signale WE1, WE2, WE3, WE4, ..., WEx zu erhalten. Die den Weltereignissen entsprechenden Signale WE1, WE2, WE3, WE4, ..., WEx sind in diesem Zusammenhang auf dem Trägermedium 16 vorbelegt. Unter dem Begriff "Weltereignisse" werden im allgemeinen sämtliche Zustandsänderungen hinsichtlich des graphischen Ausgestalten von Bildern und das Aktivieren von in den Bildern vorgesehenen, im wesentlichen unbewegten Objekten verstanden.

In dem Ausführungsbeispiel der Fig. 5b ist beispielsweise eine Sequenz von Audioereignissen AE1, AE2, AE4, AE1, AE2, AE1, AENull, AE2, AE3, AE1, ..., AEx dargestellt, die durch die Musteranalyse gemäß Schritt 304 erzeugt wurden und aufeinanderfolgend abgearbeitet werden. Beginnt der Start beispielsweise beim Knotenpunkt 0, führt das dem Audioereignis entsprechende Signal AE1 zum Knotenpunkt 1. Der Knotenpunkt 1 ist mit einem Weltereignis belegt, so daß ein diesem Weltereignis entsprechendes Signal WE1 erzeugt wird. Ausgehend vom Knotenpunkt 1 führt das dem Audioereignis entsprechende Signal AE2, welches dem Audioereignis entsprechenden Signal AE1 in der Sequenz nachfolgt, zum Knotenpunkt 2. Dem Knotenpunkt 2 ist ebenfalls ein Weltereignis zugeordnet, so daß ein diesem Weltereignis entsprechendes Signal WE4 erzeugt wird. Weitergehend von dem Knotenpunkt 2 führt das dem Audioereignis entsprechende Signal AE4 zu dem Knotenpunkt 3. Da am Knotenpunkt 3 anhand der Informationen des Trägermediums 16 kein Weltereignis vorhanden ist, kann demzufolge auch kein einem bestimmten Weltereignis entsprechendes Signal erzeugt werden. Da entsprechend den Informationen des Trägermediums 16 vorbestimmt ist, daß der Knotenpunkt 3 nicht Ausgangspunkt für das dem Audioereignis entsprechende Signal AE1 sein kann, bleibt das dem Audioereignis entsprechende Signal AE1, welches dem vorhergehenden Signal AE4 in der Sequenz folgt, unberücksichtigt. Der Knotenpunkt 3 stellt daher erst den Ausgangspunkt für das dem Audioereignis entsprechenden Signal AE1 nachfolgende dem Audioereignis entsprechende Signal AE2 in der Sequenz dar. Das dem Audioereignis entsprechende Signal AE2 führt zu dem Knotenpunkt 7. Da der Knotenpunkt 7 wieder mit einem Weltereignis vorbelegt ist, wird ein diesem Weltereignis entsprechendes Signal WE3 erzeugt. Nunmehr ausgehend von dem Knotenpunkt 7 führt das dem Audioereignis entsprechende Signal AE1 zum Knotenpunkt 6, der ebenfalls mit einem Weltereignis belegt ist. Insoweit wird am Knotenpunkt 6 ein dem Weltereignis entsprechendes Signal WE5 erzeugt. Das dem Audioereignis entsprechende Signal AENull führt vom Knotenpunkt 6 zurück zum Knotenpunkt 0. Ein einem Weltereignis entsprechendes Signal wird daher am Knotenpunkt 0 abermals nicht erzeugt. Vielmehr führt das dem Audioereignis entsprechende Signal AE2, das in der Sequenz dem dem Audioereignis entsprechenden Signal AENull nachfolgt, zum Knotenpunkt 4, usw..

Die im Schritt 308 durch Auswählen und Kombinieren von bestimmten den Audioereignissen entsprechenden Signalen AE1, AE2, AE3, AE4, ..., AEx, AENull erhaltenen Signale WE1, WE2, WE3, WE4, ..., WEx, die bestimmten Weltereignissen entsprechen, werden zur weiteren Verarbeitung gemäß Schritt 312 in einer Reihe aufeinanderfolgend angeordnet und nacheinander verarbeitet.

Die Verarbeitung bzw. Abarbeitung der in dem Schritt 312 gebildeten Sequenz aus den bestimmten Weltereignissen entsprechenden Signalen WE1, WE2, WE3, WE4, ..., WEx wird sodann entsprechend Fig. 5c vorgenommen. Dabei ist jedem einem bestimmten Weltereignis entsprechenden Signal WE1, WE2, WE3, WE4, ..., WEx ein vorbestimmtes Bild bzw. in dem Bild vorgesehenes, im wesentlichen unbewegtes Objekt entsprechend den Informationen des Trägermediums 16 zugeordnet.

Des weiteren werden in diese Sequenz gemäß Schritt 3121 Zufallsereignisse WEZx stochastisch eingefügt.

Im folgenden Schritt 3122 wird in der Sequenz von WE1, WE2, WE3, WE4, ..., WEx nach dem zufälligen Auftreten von WEZx gesucht und jeweils ein durch das Verfahren genau bestimmtes Ereignis WE1, WE2, WE3, WEx durch ein zufällig bestimmtes Ereignis WE1, WE2, WE3, WE4, WEx ersetzt.

Gemäß Schritt 313 wird zunächst überprüft, ob ein Signal WE1 in der gebildeten Sequenz vorhanden ist. Bei Vorhandensein des Signals WE1 wird anhand der Daten des Trägermediums 16 ein sogenanntes Kamera-Positions-Ereignis gemäß Schritt 314 ausgelöst, in dessen Zuge eine neue Kameraposition gemäß Schritt 316 berechnet wird. Bei Nichtvorhandensein des Signals WE1 wird automatisch gemäß Schritt 318 überprüft, ob ein Signal WE2 existiert.

Bei Vorhandensein des Signals WE2 wird ein sogenanntes Kamera-Rotations-Ereignis gemäß Schritt 320 ausgelöst, dem eine Berechnung der neuen Kamera-Rotation gemäß Schritt 322 folgt. Bei Nichtvorhandensein des Signals WE2 wird gemäß Schritt 324 überprüft, ob ein Signal WE3 in der gebildeten Sequenz gemäß Schritt 312 vorkommt.

Bei Vorhandensein des Signals WE3 wird ein sogenanntes ObjektAuswahl-Ereignis gemäß Schritt 326 ausgelöst. Wenn sich gemäß Schritt 328 herausstellt, daß bis dato kein Objekt ausgewählt wurde, wird aus den Informationen bzw. Daten des Trägermediums 16 ein Objekt stochastisch oder vorbestimmt gemäß Schritt 330 ausgewählt, gemäß Schritt 332 aktiviert und gemäß Schritt 334 für eine nachfolgende Verarbeitung gespeichert. Auf diese Weise ist sichergestellt, daß in jedem Fall ein Objekt aktiviert werden kann, selbst wenn keine sonstigen aktivierbaren Objekte vorhanden sind. Stellt sich demgegenüber gemäß Schritt 328 heraus, daß ein Objekt bereits ausgewählt wurde, wird das Verfahren mit dem nachfolgend noch beschriebenen Schritt 348 fortgesetzt. Bei Nichtvorhandensein des Signals WE3 wird automatisch gemäß Schritt 336 überprüft, ob ein Signal WE4 vorhanden ist.

Bei Vorhandensein des Signals WE4 wird ein sogenanntes Effekt-Auswahl-Ereignis gemäß Schritt 338 ausgelöst, in dessen Zuge ein bestimmter Effekt, wie beispielsweise eine bestimmte Lichtfarbe, eine bestimmte Lichtintensität oder dergleichen, gemäß Schritt 340 ausgewählt wird. Bei Nichtvorhandensein des Signals WE4 wird automatisch gemäß Schritt 342 überprüft, ob ein Signal WE5 in der gebildeten Sequenz auftaucht.

Bei Vorhandensein des Signals WE5 wird ein sogenanntes Effekt-Anwendungs-Ereignis gemäß Schritt 344 initiiert, im Anschluß dessen eine Überprüfung gemäß Schritt 346 stattfindet, um festzustellen, ob ein Objekt ausgewählt wurde oder nicht. Sofern ein ausgewähltes Objekt gemäß Schritt 334 aktiviert wurde, wird dieses als letztes aktives Objekt gemäß Schritt 348 für die nachfolgende Verarbeitung aktiviert. Stellt sich demgegenüber bei der Überprüfung gemäß Schritt 346 heraus, daß kein Objekt ausgewählt wurde, wird zufällig oder vorbestimmt ein Objekt aus den Informationen bzw. Daten des Trägermediums 16 gemäß Schritt 330 ausgewählt.

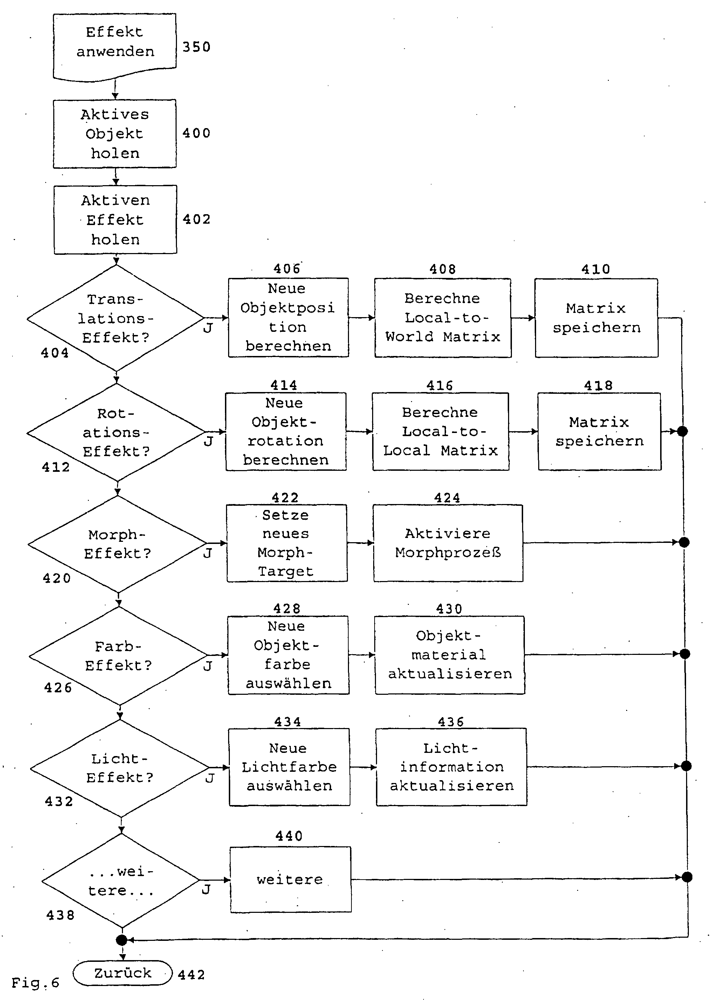

Nach Bestimmung des letzten aktiven Objekts gemäß Schritt 348 wird der Effekt gemäß Schritt 350 angewendet, der anhand der Fig. 6 als Teilverfahren nachfolgend noch näher beschrieben wird. Nach Ausführen des Schrittes 350 wird so dann das Objekt gemäß Schritt 352 deaktiviert. Bei Nichtvorhandensein des Signals WE5 wird automatisch gemäß Schritt 354 überprüft, ob ein Signal Ex in der Sequenz vorkommt, das ein weiteres beliebiges Ereignis gemäß Schritt 356 auslöst, usw.

Die Anwendung des Effekts gemäß Schritt 350 ist in dem schematischen Ablaufdiagramm der Fig. 6 näher dargestellt und ist Teil des von dem Trägermedium 16 geladenen Programms.

So wird zunächst ein aktives Objekt gemäß Schritt 400 gehölt. Anschließend wird ein aktiver Effekt gemäß Schritt 402 geholt.

Sodann wird eine Überprüfung nach einem Translations-Effekt gemäß Schritt 404 vorgenommen. Bei Vorhandensein eines Translations-Effektes wird eine neue Objektposition gemäß Schritt 406 berechnet wird, diese Transformation als Local-to-World-Matrix gemäß Schritt 408 dargestellt und gemäß Schritt 410 gespeichert. Bei Nichtvorhandensein eines Translations-Effektes wird gemäß Schritt 412 überprüft, ob ein Rotations-Effekt hinsichtlich des aktiven Effektes vorliegt.

Bei Vorhandensein eines Rotations-Effektes wird sodann eine neue Objektrotation gemäß Schritt 414 berechnet, wird diese Transformation als Local-to-Local-Matrix gemäß Schritt 416 berechnet und wird anschließend die Matrix gemäß Schritt 418 gespeichert. Bei Nichtvorhandensein eines Rotations-Effektes wird gemäß Schritt 420 überprüft, ob ein Oberflächenverformungs-Effekt existiert.

Bei Vorhandensein eines Oberflächenverformungs-Effektes wird eine neue Oberflächenzielform gemäß Schritt 422 gesetzt und der Oberflächenverformungsvorgang gemäß Schritt 424 aktiviert. Bei Nichtvorhandensein eines Oberflächenverformungs-Effektes wird gemäß Schritt 426 überprüft, ob ein Farbänderungs-Effekt vorhanden ist.

Bei Vorhandensein eines Farbänderungs-Effektes wird die neue Objektfarbe gemäß Schritt 428 ausgewählt und wird das Objektmaterial gemäß Schritt 430 aktualisiert. Bei Nichtvorhandensein eines Farbänderungs-Effektes wird gemäß Schritt 432 überprüft, ob ein Licht-Effekt existiert.

Bei Vorhandensein eines Licht-Effektes wird eine neue Lichtfarbe gemäß Schritt 434 ausgewählt und wird die Lichtinformation gemäß 436 aktualisiert. Bei Nichtvorhandensein eines Licht-Effektes wird automatisch gemäß Schritt 438 überprüft, ob ein weiterer zu verändernder Effekt vorhanden ist, und wenn ja, wird ein solcher neuer gemäß Schritt 440 ausgewählt usw.

Sobald die Überprüfung von sämtlichen vorhandenen, zu verändernden Effekten beendet ist, erfolgt ein Rücksprung gemäß Schritt 442 zum Schritt 350, an welchen sich wiederum der Schritt 352 zur Deaktivierung des Objektes anschließt.

Entsprechend der Fig. 5d werden alle im aktuellen Segment aktiven Objekte aus den von dem Trägermedium 16 zur Verfügung gestellten Informationen bzw. Daten gemäß Schritt 358 nacheinander ausgewählt. Sodann wird gemäß Schritt 360 überprüft, ob es sich bei dem ausgewählten Objekt um ein in einem Kontext aktives Objekt handelt. Sofern dies der Fall ist, wird weiter gemäß Schritt 362 überprüft, ob die Oberflächenverformung für dieses Objekt aktiviert ist oder nicht. Sofern die Oberflächenverformung aktiviert ist, wird eine neue Zielphase für die Oberflächenverformung gemäß Schritt 364 berechnet und anschließend auf die Objektgeometrie gemäß Schritt 366 angewendet. Entsprechendes gilt für weitere, gegebenenfalls zu aktivierende bzw. zu verändernde Parameter, wie die Gestaltung der Form, der Oberfläche, der Farbe, des Lichtes des Objektes oder auch der Umgebung des Objektes etc. gemäß den Schritten 368 und 370.

Anschließend werden sämtliche gespeicherte Local-to-Local-Matrizen gemäß Schritt 372 und die Local-to-World-Matrix gemäß Schritt 374 angewendet. Nachfolgend wird die Lichtberechnung auf das Objekt gemäß Schritt 376 angewendet. Schließlich wird noch die World-to-Screen-Matrix gemäß Schritt 378 eingesetzt, an welchem sich das 3D-Clipping von bestimmten Objekten gemäß Schritt 380 anschließt. Zuletzt werden ausgehend von den Informationen des Trägermediums 16 bzw. von den Ausgangsinformationen des Ist-Zustandes die erhaltenen Informationen des Soll-Zustandes zusammengeführt und gemäß Schritt 382 visualisiert.

Für den Fall, daß eine Überprüfung gemäß Schritt 360 ergibt, daß das Objekt nicht aktiv ist, werden die Schritte 362 bis 382 übersprungen.

Schließlich erfolgt eine Überprüfung gemäß Schritt 384, dahingehend, bis sämtliche in einem Kontext aktiven Objekte erfaßt wurden. Für den Fall, daß noch Objekte vorhanden sind, welche ebenfalls abgearbeitet werden müssen, wird der Vorgang vor den Schritt 358 zurückgesetzt und das entsprechend nächste Objekt aus den Informationen und Daten des Trägermediums 16 ausgewählt und gemäß den obigen Schritten erneut visualisiert.

Anderenfalls wird das gesamte Verfahren zurückgesetzt und mit Schritt 300 erneut begonnen.

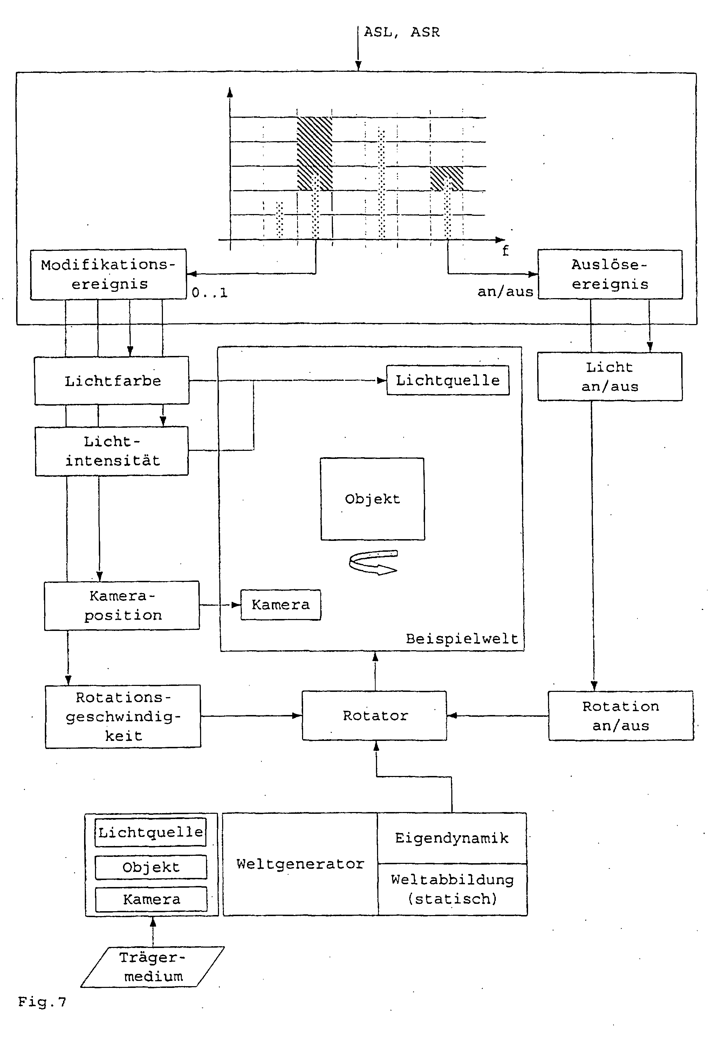

Das zuvor beschriebene erfindungsgemäße Verfahren wird im folgenden noch anhand des in der Fig. 7 gezeigten Beispiels näher erläutert.

Die Informationen und Daten des Trägermediums 16 sind in die Datenverarbeitungseinheit 48 der Lese- und Verarbeitungsvorrichtung 14 eingelesen. Beispielsweise stellt das Trägermedium 16 die Daten eines Bildes zur Verfügung, in dessen Mitte ein Objekt angeordnet ist. Dieses Objekt wird von einer Lichtquelle angestrahlt und von einer Kamera betrachtet. Das Objekt ist derzeit noch im wesentlichen unbeweglich, kann aber infolge bestimmter akustischer Signale um seine Längsachse entsprechend dem Pfeil in Drehung versetzt werden.

Infolge bestimmter akustischer Signale, die in Frequenzkomponenten zerlegt und der Lese- und Verarbeitungsvorrichtung 14 zugeführt wurden, werden Signale erzeugt, die ein Ein- bzw. Ausschalten des Lichtes und/oder der Rotation in dem Bild bewirken. Gleichzeitig werden damit verbunden Modifikatorsignale ausgelöst, welche beispielsweise eine Abstufung der Lichtfarbe und/oder Lichtintensität zur Folge haben, eine Veränderung der Kameraposition vornehmen oder eine Verstellung der Rotationsgeschwindigkeit nach sich ziehen. Mit dem Auftreten der (vor-) bestimmten Frequenzkomponenten läßt sich somit auf einfache Weise ein von dem Trägermedium 16 weitgehend statisches Bild in ein dynamisches Bild transformieren und visualisieren.

Die vorliegende Erfindung ist nicht auf das zuvor detailliert beschriebenen Ausführungsbeispiele zum graphischen Ausgestalten von Bildern und zum Aktivieren von in den Bildern vorgesehenen, im wesentlichen unbewegten Objekten mittels akustischer Signale beschränkt. Vielmehr eignet sich die vorliegende Erfindung ganz allgemein zum Transformieren bzw. Umsetzen von akustischen Signalen in, insbesondere visuell wahrnehmbare, Ereignisse. So ist es ohne weiteres möglich, akustische Signale in Form eines Musikstückes, Liedes oder dergleichen mittels der vorliegenden Erfindung zu verwenden, um eine Lichtsteueranlage bzw. Lichtorgel einer Diskothek zu betätigen oder ein Wasserspiel bzw. eine "Wasser-Show" oder ähnliche Veranstaltungen zu steuern etc.

Obschon es durchaus denkbar ist, das erfindungsgemäße Verfahren ausschließlich auf der Basis der Frequenzkomponenten A, B, C, D, ..., X oder Amplitudenwerte A', B', C', D', ..., X' durchzuführen, hat sich in der Praxis das erfindungsgemäße Verfahren bei einer Kombination von ermittelten Frequenzkomponenten A, B, C, D, ..., X oder Amplitudenwerten A', B', C', D', ..., X' am vorteilhaftesten herausgestellt.

## Patentansprüche

1. Einheit zum Transformieren von akustischen Signalen (ASL, ASR) in, insbesondere visuell wahrnehmbare, Ereignisse, die eine Vorrichtung (12) zum Empfangen der akustischen Signale (ASL, ASR) und zum Verarbeiten der empfangenen akustischen Signale (ASL, ASR) sowie eine damit kommunizierende Vorrichtung (14) zum Lesen und Verarbeiten der von der Empfangs- und Verarbeitungsvorrichtung (12) gelieferten Signale und von auf einem Trägermedium (16) enthaltenen Informationen, die mit einer Einrichtung (18) zum Realisieren, insbesondere Sichtbarmachen, der Ereignisse verbunden ist, umfaßt, **dadurch gekennzeichnet, daß** die Empfangs- und Verarbeitungsvorrichtung (12) eine Einrichtung (38) zum Zerlegen der abgetasteten Signale in Frequenzkomponenten (A, B, C, D, ..., X) über ein Zeitintervall und eine Einrichtung (38a) zur Auswertung der abgetasteten Signale zum Erhalt von Amplitudenwerten (A', B', C', D', ..., X') über ein Zeitintervall sowie eine Einrichtung zum Selektieren und/oder Zuordnen der Frequenzkomponenten (A, B, C, D, ..., X) und der Amplitudenwerten (A', B', C', D', ..., X') zu Kombinationswerten (K1, K2, K3, K4, ..., Kx) daraus und unter Verwendung von auf einem Trägermedium (16) enthaltenen Informationen, die in bestimmte Audioereignissen entsprechende Signale bemuster- und transformierbar sind, umfaßt.

2. Einheit nach Anspruch 1, **dadurch gekennzeichnet, daß** die Empfangs- und Verarbeitungsvorrichtung (12) mit einer Ein-richtung (20) zum Abspielen von auf einem Trägermedium (22) enthaltenen Audio-Informationen verbunden ist.

3. Einheit nach Anspruch 1 oder 2, **dadurch gekennzeichnet, daß** die Empfangs- und Verarbeitungsvorrichtung (12) eine Einrichtung (28) zur Pegelangleichung und A/D-Wandlung der empfangenen akustischen Signale (ASL, ASR) umfaßt.

4. Einheit nach Anspruch 3, **dadurch gekennzeichnet, daß** die Einrichtung (28) zur Pegelangleichung und A/D-Wandlung wenigstens einen Verstärker (30) und/oder ein Filter (32) umfaßt.

5. Einheit nach einem der Ansprüche 1 bis 4, **dadurch gekennzeichnet, daß** die Empfangs- und Verarbeitungsvorrichtung (12) eine Einrichtung (36) zum Digitalisieren der empfangenen Signale (ASL, ASR) aufweist.

6. Einheit nach einem der Ansprüche 1 bis 5, **dadurch gekennzeichnet, daß** die Empfangs- und Verarbeitungsvorrichtung (12) einen Protokollgenerator (40) aufweist, der die erhaltenen Frequenzkomponenten (A, B, C, D, ..., X) und Amplitudenwerte (A', B', C', D', ..., X'), insbesondere in einer auf die Lese- und Verarbeitungsvorrichtung (14) abgestimmten, lesbaren Form, an die Lese- und Verarbeitungsvorrichtung (14) weiterleitet.

7. Einheit nach Anspruch 6, **dadurch gekennzeichnet, daß** die Empfangs- und Verarbeitungsvorrichtung (12) eine Datenverarbeitungseinheit (42) aufweist, die mit einem Bootloader (44) kommuniziert, welcher beim Starten der Einheit (10) mit einem Teil der auf dem Trägermedium (16) enthaltenen Informationen versorgbar ist, und die Pegelangleichungs- und A/D-Wandlungseinrichtung (28), die Signalzerlegungseinrichtung (38), die Amplitudenauswertungseinrichtung (38a) und den Protokollgenerator (40) steuert.

8. Einheit nach Anspruch 7, **dadurch gekennzeichnet, daß** die Lese- und Verarbeitungsvorrichtung (14) eine Einrichtung (46) zum Lesen der auf dem Trägermedium (16) enthaltenen Informationen und eine Datenverarbeitungseinheit (48) zum Verarbeiten und/oder anschließenden Speichern der von der Empfangs- und Verarbeitungsvorrichtung (12) gelieferten Frequenzkomponenten (A, B, C, D, ..., X) und/oder Amplitudenwerte (A', B', C', D', ..., X') und von dem Trägermedium (16) abgelesenen Informationen umfaßt.

9. Einheit nach einem der Ansprüche 1 bis 8, **dadurch gekennzeichnet, daß** die Lese- und Verarbeitungsvorrichtung (14) als Personal-Computer, mit einer Dateneinleseeinheit, insbesondere einem CD-Laufwerk, einem DVD-Laufwerk oder einer auf elektronische Weise realisierten Dateneinleseeinheit, ausgebildet ist.

10. Einheit nach einem der Ansprüche 1 bis 8, **dadurch gekennzeichnet, daß** die Lese- und Verarbeitungsvorrichtung (14) als Station für Spiele, interaktive Anwendungen oder Lernprogramme ausgebildet ist.

11. Einheit nach einem der Ansprüche 1 bis 10, **dadurch gekennzeichnet, daß** die Einheit zum Transformieren der akustischen Signale (ASL, ASR) in, insbesondere visuell wahrnehmbare, Ereignisse zum Ausgestalten von Bildern und zum Aktivieren von in den Bildern vorgesehenen, im wesentlichen unbewegten Objekten mittels der akustischen Signale (ASL, ASR) ausgebildet ist, wobei die Einrichtung zum Realisieren, insbesondere Sichtbarmachen, der Ereignisse einen Bildschirm (18) zum Darstellen der graphischen Bilder und der in den Bildern vorgesehenen, aktivierten Objekte umfaßt.

12. Einheit nach einem der Ansprüche 1 bis 10, **dadurch gekennzeichnet, daß** die Einheit zum Transformieren der akustischen Signale (ASL, ASR) in, insbesondere visuell wahrnehmbare, Ereignisse zum Verändern von Zuständen von Müsiksynthesizern, Lichtsteueranlagen bzw. Lichtorgeln von Diskotheken oder Wasserspielen ausgebildet ist.

13. Verfahren zum Transformieren von akustischen Signalen (ASL, ASR) in, insbesondere visuell wahrnehmbare, Ereignisse, insbesondere in einer Einheit nach einem der Ansprüche 1 bis 12 durchgeführt, mit folgenden Schritten:
aa) Empfangen der akustischen Signale (ASL, ASR), in einer Vorrichtung (12) zum Empfangen der akustischen Signale (ASL, ASR) und zum Verarbeiten der empfangenen akustischen Signale (ASL, ASR),
bb) Digitalisieren der empfangenen Signale aus Schritt aa) in einer Einrichtung (36),
cc) Zerlegen der Signale aus Schritt bb) in einer Einrichtung (38) zur Zerlegung der Signale in Frequenzkomponenten (A, B, C, D, ..., X) über ein Zeitintervall und Auswerten der Signale aus Schritt bb) in einer Einrichtung (38a) zum Erhalt von Amplitudenwerte (A', B', C', D', ..., X') über ein Zeitintervall,
dd) Selektieren und/oder Zuordnen von Frequenzkomponenten (A, B, C, D, ..., X) und/oder Amplitudenwerten (A', B', C', D', ..., X') zu Kombinationswerten (K1, K2, K3, K4, ..., Kx) daraus und unter Verwendung von auf einem Trägermedium (16) enthaltenen Informationen,
ee) Bemustern und Transformieren der Kombinationswerte (K1, K2, K3, K4, ..., Kx) aus Schritt dd) in bestimmte Audioereignissen entsprechende Signale (AE1, AE2, AE3, AE4, ..., AEx, AENull) in einer Vorrichtung (14) zum Lesen und Verarbeiten der Signale (AE1, AE2, AE3, AE4, ..., AEx, AENull) unter Verwendung der Informationen des Trägermediums (16),
ff) Auswählen und Kombinieren von bestimmten den Audioereignissen entsprechenden Signalen (AE1, AE2, AE3, AE4, ..., AEx, AENull) aus Schritt ee) unter Verwendung der Informationen des Trägermediums (16) zum Erhalt von bestimmten Weltereignissen entsprechenden Signalen (WE1, WE2, WE3, WE4, ..., WEx),
gg) Zuordnen von bestimmten den Weltereignissen entsprechenden Signalen (WE1, WE2, WE3, WE4, ..., WEx) aus Schritt ff) zu vorbestimmten Objekten bzw. Ereignissen unter Verwendung der Informationen des Trägermediums (16),
hh) Aktivieren der vorbestimmten Objekte bzw. Ereignisse durch Ausführen der den bestimmten Weltereignissen entsprechenden Signale (WE1, WE2, WE3, WE4, ..., WEx) aus Schritt gg),
ii) Verändern des jeweiligen Zustandes der aktivierten Objekte bzw. Ereignisse, und
jj) Wiederholen der Schritte hh) und ii) bis sämtliche vorbestimmten Objekte bzw. Ereignisse aktiviert und verändert wurden, die für ein bestimmtes Zeitintervall definiert sind.

14. Verfahren nach Anspruch 13, **dadurch gekennzeichnet, daß** die einzelnen Kombinationswerte (K1, K2, K3, K4, ..., Kx) aus Schritt dd) von der Empfangs- und Verarbeitungsvorrichtung (12) an die Lese- und Verarbeitungsvorrichtung (14) weitergeleitet werden, insbesondere nachdem die Empfangs- und Verarbeitungsvorrichtung (12) einmalig auf ein Fragesignal ein korrespondierendes Antwortsignal von der Lese- und Verarbeitungsvorrichtung (14) erhalten hat.

15. Verfahren nach Anspruch 13 oder 14, **dadurch gekennzeichnet, daß** die Schritte aa) bis cc) für nachfolgende akustische Signale (ASL, ASR) wiederholt werden, nachdem die einzelnen Kombinationswerte (K1, K2, K3, K4, ..., Kx) aus Schritt dd) von der Empfangs- und Verarbeitungsvorrichtung (12) an die Lese- und Verarbeitungsvorrichtung (14) weitergeleitet wurden.

16. Verfahren nach einem der Ansprüche 13 bis 15, **dadurch gekennzeichnet, daß** wenigstens ein Signal (AENull) erzeugt wird, wenn ein Kombinationswert (K1, K2, K3, K4, ..., Kx) aus Schritt ee) nicht in ein einem bestimmten Audioereignis entsprechendes Signal (AE1, AE2, AE3, AE4, ..., AEx) transformierbar ist.

17. Verfahren nach Anspruch 16, **dadurch gekennzeichnet, daß** wenigstens ein Signal (AENull) mit einem vorbestimmten Audioereignis belegt wird.

18. Verfahren nach Anspruch 16 oder 17, **dadurch gekennzeichnet, daß** die den bestimmten Audioereignissen entsprechenden Signale (AE1, AE2, AE3, AE4, ..., AEx) und das wenigstens eine Signal (AENull) aus Schritt ee) zur weiteren Verarbeitung in einer Reihe aufeinanderfolgend angeordnet und nacheinander verarbeitet werden.

19. Verfahren nach einem der Ansprüche 13 bis 18, **dadurch gekennzeichnet, daß** die erhaltenen, den bestimmten Weltereignissen entsprechenden Signale (WE1, WE2, WE3, WE4, ..., WEx) aus Schritt ff) zur weiteren Verarbeitung in einer Reihe aufeinanderfolgend angeordnet und nacheinander verarbeitet werden.

20. Verfahren nach einem der Ansprüche 13 bis 19, **dadurch gekennzeichnet, daß** durch die erhaltenen, den bestimmten Weltereignissen entsprechenden Signale (WE1, WE2, WE3, WE4, ..., WEx) vorbestimmte translatorische und/oder rotatorische Bewegungen des Objektes, Gestaltung der Form, der Oberfläche, der Farbe, des Lichtes des Objektes und der Umgebung des Objektes sowie eine bestimmte Ansicht auf das Objekt ausgewählt werden.

21. Verfahren nach Anspruch 20, **dadurch gekennzeichnet, daß** wenigstens ein Objekt stochastisch oder vorbestimmt ausgewählt wird, das durch eines der erhaltenen, den bestimmten Weltereignissen entsprechenden Signale (WE1, WE2, WE3, WE4, ..., WEx) zu Aktionen veranlaßbar ist, wenn keine sonstigen aktivierbaren Objekte vorhanden sind.

22. Verfahren nach Anspruch 20 oder 21, **dadurch gekennzeichnet, daß** die ausgewählten translatorischen und/oder rotatorischen Bewegungen des Objektes, die Gestaltung der Form, der Oberfläche, der Farbe, des Lichtes des Objektes und der Umgebung des Objektes sowie die bestimmte Ansicht auf das Objekt ausgehend von den Informationen des Trägermediums (16) bzw. von den Ausgangsinformationen des Ist-Zustandes zum Erhalt von Informationen eines Soll-Zustandes berechnet und anschließend als Ausgangsinformationen eines neuen Ist-Zustandes von der Lese- und Verarbeitungsvorrichtung (14) gespeichert werden.

23. Verfahren nach einem der Ansprüche 13 bis 22, **dadurch gekennzeichnet, daß** mittels der akustischen Signale (ASL, ASR) Bilder graphisch ausgestaltet und in den Bildern vorgesehene, im wesentlichen unbewegte Objekte aktiviert werden, mit folgenden sich an die Schritte aa) bis ff) anschließenden Schritten:
1) Zuordnen von bestimmten den Weltereignissen entsprechenden Signalen (WE1, WE2, WE3, WE4, ..., WEx) aus Schritt ff) zu vorbestimmten in den Bildern vorgesehenen, im wesentlichen unbewegten Objekten unter Verwendung der Informationen des Trägermediums (16),
2) Ausgestalten der Bilder und Aktivieren der vorbestimmten, im wesentlichen unbewegten Objekte, durch Ausführen der den bestimmten Weltereignissen entsprechenden Signale (WE1, WE2, WE3, WE4, ..., WEx) aus Schritt 1),
3) Darstellen der Bilder und aktivierten Objekte auf einem Bildschirm (18) oder dergleichen, und
4) Wiederholen der Schritte 2) und 3) bis sämtliche vorbestimmten Bilder ausgestaltet und Objekte aktiviert wurden, die für ein bestimmtes Intervall definiert sind.

24. Verfahren nach einem der Ansprüche 13 bis 23, **dadurch gekennzeichnet, daß** mittels der akustischen Signale (ASL, ASR) Zustände von Musiksynthesizern, Lichtsteueranlagen bzw. Lichtorgeln von Diskotheken oder Wasserspielen verändert werden.

## Claims

1. A unit for transforming audio signals (ASL, ASR) into events, more particularly visually perceptible events, comprising a device (12) for detecting audio signals (ASL, ASR) and for processing said detected audio signals (ASL, ASR) as well as a device (14) communicating therewith for reading and processing the signals furnished by said detecting and processing device (12) and information contained on an input medium (16) connected to a means (18) for rendering, more particularly visualizing, said events, **characterized in that** said detecting and processing device (12) comprises a means (38) for resolving said sampled signals into frequency components (A, B, C, D, ..., X) over a time interval and a means (38a) for analyzing said sampled signals to obtain amplitude values (A', B', C', D', ..., X') over a time interval as well as a means for selecting and/or assigning said frequency components (A, B, C, D, ..., X) and said amplitude values (A', B', C', D', ..., X') into combination values (K1, K2, K3, K4, ..., Kx) and making use of said information contained on an input medium (16) for patterning and transforming into signals corresponding to specific sound events

2. The unit as set forth in claim 1, **characterized in that** said detecting and processing device (12) is connected to a playback means (20) for playing sound information contained on an input medium (22).

3. The unit as set forth in claim 1 or 2, **characterized in that** said detecting and processing device (12) comprises a means (28) for level matching and A/D conversion of said detected audio signals (ASL, ASR).

4. The unit as set forth in claim 3, **characterized in that** said means (28) for level matching and A/D conversion comprises at least one amplifier (30) and/or filter (32).

5. The unit as set forth in any of the claims 1 to 4, **characterized in that** said detecting and processing device (12) comprises a means (36) for digitizing said detected audio signals (ASL, ASR).

6. The unit as set forth in any of the claims 1 to 5, **characterized in that** said detecting and processing device (12) comprises a protocol generator (40) for communicating said frequency components (A, B, C, D, ..., X), and amplitude values (A', B', C', D', ..., X'), more particularly in a form readable by said reading and processing device (14) to said reading and processing device (14).

7. The unit as set forth in claim 6, **characterized in that** said detecting and processing device (12) comprises a data processing unit (42) communicating with a boot loader (44) receiving part of the information contained on said input medium (16) when booting said unit (10), and which controls said level adaptation and A/D conversion means (28), signal resolver (38), amplitude analyzer (38a) and protocol generator (40).

8. The unit as set forth in claim 7, **characterized in that** said reading and processing device (14) comprises a means (46) for reading said information contained on said input medium (16) and a data processing unit (48) for processing and/or subsequently storing said frequency components (A, B, C, D, ..., X), furnished by said detecting and processing device (12) and/or amplitude values (A', B', C', D', ..., X') and information read from said input medium (16).

9. The unit as set forth in any of the claims 1 to 8, **characterized in that** said reading and processing device (14) is configured as a personal computer, including a data input reader, more particularly a CD drive, a DVD drive or a data input reader achieved by electronic means.

10. The unit as set forth in any of the claims 1 to 8, **characterized in that** said reading and processing device (14) is configured as a play station, for interactive applications or teach programs.

11. The unit as set forth in any of the claims 1 to 10, **characterized in that** said unit for transforming said audio signals (ASL, ASR) into events, more particularly visually perceptible events, is configured for configuring images and activating objects provided substantially stationary in said images by means of audio signals (ASL, ASR), said rendering means, more particularly visualizing, said events comprising a display (18) for displaying graphic images and said activated objects provided in said images.

12. The unit as set forth in any of the claims 1 to 10, **characterized in that** said unit for transforming said audio signals (ASL, ASR) into events, more particularly visually perceptible events, is configured for changing the conditions of music synthesizers and dancing light and water fountain systems in discotheques.

13. A method for transforming audio signals (ASL, ASR) into events, more particularly visually perceptible events, as implemented more particularly in a unit as set forth in any of the claims 1 to 12, comprising the following steps:
aa) detecting said audio signals (ASL, ASR) in a device (12) for detecting said audio signals (ASL, ASR) and processing said detected audio signals (ASL, ASR),
bb) digitizing said detected signals of step aa) in a means (36),
cc) resolving said signals from step bb) in a means (38) for resolving said sampled signals into frequency components (A, B, C, D, ..., X) over a time interval and a means (38a) for analyzing said sampled signals to obtain amplitude values (A' ,B' , C', D', ..., X') over a time interval,
dd) selecting and/or assigning said frequency components (A, B, C, D, ..., X) and amplitude values (A', B', C', D', ..., X') into combination values (K1, K2, K3, K4, ..., Kx) and in making use of said information contained on an input medium (16),
ee) patterning and transforming said combination values (K1, K2, K3, K4, ..., Kx) from step dd) into signals (AE1, AE2, AE3, AE4, ..., AEx, AEnull) corresponding to specific sound events in a device (14) for reading and processing said signals (AE1, AE2, AE3, AE4, ..., AEx, AEnull) in making use of said input medium (16),
ff) selecting and/or assigning specific signals (AE1, AE2, AE3, AE4, ..., AEx, AEnull) corresponding to said sound events from step ee) in making use of said information of the input medium (16) to obtain signals (WE1, WE2, WE3, WE4, ..., WEx) corresponding to specific world events,
gg) assigning signals (WE1, WE2, WE3, WE4, ..., Wex) corresponding to specific world events from step ff) to predefined objects or events in making use of said information of the input medium (16),
hh) activating predefined objects or events by implementing said signals (WE1, WE2, WE3, WE4, ..., WEx) corresponding to specific world events from step gg),
ii) changing each condition of said activated object or event, and
jj) repeating said steps hh) and ii) until all predefined objects or events have been activated and changed as defined for a specific time interval.

14. The method as set forth in claim 13, **characterized in that** said individual combination values (K1, K2, K3, K4, ..., Kx) from step dd) are communicated from said detecting and processing device (12) to said reading and processing device (14), more particularly after said detecting and processing device (12) has once detected a unique signal from said reading and processing device (14) in response to a request signal.

15. The method as set forth in claim 13 or 14, **characterized in that** said steps aa) to cc) are repeated for subsequent audio signals (ASL, ASR) after said individual combination values (K1, K2, K3, K4, ..., Kx) from step dd) have been communicated from said detecting and processing device (12) to said reading and processing device (14).

16. The method as set forth in claim 13 or 15, **characterized in that** at least one signal (AEnull) is generated when a combination value (K1, K2, K3, K4, ..., Kx) from step ee) is non-transformable into a signal (AE1, AE2, AE3, AE4, ..., AEx, AEnull) corresponding to a specific sound event.

17. The method as set forth in claim 16, **characterized in that** at least one signal (AEnull) is assigned a predefined sound event.

18. The method as set forth in claim 16 or 17, **characterized in that** said signals (AE1, AE2, AE3, AE4, ..., AEx, AEnull) corresponding to said specific sound events and said at least one signal (AEnull) from step ee) are processsed in a string.

19. The method as set forth in any of the claims 13 to 18, **characterized in that** said (WE1, WE2, WE3, WE4, ..., WEx) corresponding to said specific world events detected from step ff) are processed in a string.

20. The method as set forth in any of the claims 13 to 19, **characterized in that** predefined translational and/or rotational movements of the object, configuring the shape, surface, color, light of the object and its surroundings as well as a specific view of the object are selected by said detected signals (WE1, WE2, WE3, WE4, ..., WEx) corresponding to said specific world events.

21. The method as set forth in claim 20, **characterized in that** at least one object is selected stochastically or predefined, as activatable by one of said detected signals (WE1, WE2, WE3, WE4, ..., WEx) corresponding to said specific world events, when no other objects are available for activation.

22. The method as set forth in claim 20 or 21, **characterized in that** said predefined translational and/or rotational movements of the object, configuring the shape, surface, color, light of the object and its surroundings as well as a specific view of the object is computed on the basis of said information of the input medium (16) or starting information as to said actual condition relating to said information detected of a wanted condition and is subsequently stored by said reading and processing device (14) as said starting information for a new actual condition.

23. The method as set forth in any of the claims 13 to 22, **characterized in that** images are graphically configured by means of said audio signals (ASL, ASR) and objects provided subsequently stationary in said images are activated by the following steps subsequent to steps aa) to ff):
1) assigning (WE1, WE2, WE3, WE4, ..., WEx) corresponding to specific world events from step ff) to predefined objects provided subsequently stationary in said images in making use of said information of the input medium (16),
2) configuring said images and activating said predefined objects provided subsequently stationary by implementing said signals (WE1, WE2, WE3, WE4, ..., WEx) corresponding to said specific world events from step 1),
3) displaying said images and activated objects on a (18) or the like, and
4) repeating steps 2) and 3) until all predefined images have been configured and objects activated as defined for a specific interval.

24. The method as set forth in any of the claims 13 to 23, **characterized in that** said audio signals (ASL, ASR) are used for changing the conditions of music synthesizers and dancing light and water fountain systems in discotheques.

## Revendications

1. Unité pour la transformation de signaux acoustiques (ASL, ASR) en phénomènes, en particulier en phénomènes perceptibles visuellement, comprenant un dispositif (12) pour la réception des signaux acoustiques (ASL, ASR) et pour le traitement des signaux acoustiques (ASL, ASR) reçus, ainsi qu'un dispositif (14) communiquant avec celui-ci pour la lecture et le traitement des signaux délivrés par le dispositif de réception et de traitement (12) ainsi que d'informations contenues sur un média-support (16), reliée à un dispositif (18) pour réaliser, en particulier pour visualiser les évènements, **caractérisé en ce que** le dispositif de réception et de traitement (12) comprend un dispositif (38) pour décomposer les signaux palpés en composantes de fréquence (A, B, C, D, ..., X) sur un intervalle de temps et un dispositif (38a) pour le traitement des signaux palpés aux fins d'obtenir des valeurs d'amplitude (A', B', C', D' , ..., X') sur un intervalle de temps ainsi qu'un dispositif pour sélectionner et/ou associer les composantes de fréquence (A, B, C, D, ..., X) et les valeurs d'amplitude (A', B', C', D', ..., X') pour former des valeurs de combinaison (K1, K2, K3, K4, ..., Kx), en utilisant des informations contenues sur un média-support (16) qui peuvent être échantillonnées et transformées en des signaux correspondant à des évènements audio déterminés.

2. Unité selon la revendication 1, **caractérisée en ce que** le dispositif de réception et de traitement (12) est relié à un dispositif (20) pour la reproduction d'informations audio contenues sur un média-support (22).

3. Unité selon la revendication 1 ou 2, **caractérisée en ce que** le dispositif de réception et de traitement (12) comprend un dispositif (28) pour la compensation du niveau et la conversion analogique/numérique des signaux acoustiques (ASL, ASR) reçus.

4. Unité selon la revendication 3, **caractérisée en ce que** le dispositif (28) pour la compensation du niveau et la conversion analogique/numérique comprend au moins un amplificateur (30) et/ou un filtre (32).

5. Unité selon une des revendications 1 à 4, **caractérisée en ce que** le dispositif de réception et de traitement (12) comprend un dispositif (36) pour 1a numérisation des signaux (ASL, ASR) reçus.

6. Unité selon une des revendications 1 à 5, **caractérisée en ce que** le dispositif de réception et de traitement (12) comporte un générateur de protocole (40) qui transmet au dispositif de lecture et de traitement (14) les composantes de fréquence (A, B, C, D, ..., X) reçues et les valeurs d'amplitude (A', B', C', D', ..., X'), en particulier sous une forme lisible adaptée pour le dispositif de lecture et de traitement (14).

7. Unité selon la revendication 6, **caractérisée en ce que** le dispositif de réception et de traitement (12) comporte une unité de traitement de données (42) qui communique avec un chargeur de démarrage (44) qui, lors du lancement de l'unité (10), peut être alimenté avec une partie des informations contenues sur le média-support (16) et commande le dispositif de compensation de niveau, le convertisseur analogique/numérique (28), le dispositif de décomposition de signal (38), le dispositif de traitement d'amplitude (38a) et le générateur de protocole (40).

8. Unité selon la revendication 7, **caractérisée en ce que** le dispositif de lecture et de traitement (14) comprend un dispositif (46) pour la lecture et le traitement des informations contenues sur le média-support (16) et une unité de traitement de données (48) pour le traitement et/ou la mémorisation consécutive des composantes de fréquence (A, B, C, D, ..., X) et/ou des valeurs d'amplitude (A', B', C', D', ..., X') et d'informations lues sur le média-support (16).

9. Unité selon une des revendications 1 à 8, **caractérisée en ce que** le dispositif de lecture et de traitement (14) se présente sous la forme d'un ordinateur individuel avec une unité d'entrée de données, en particulier un lecteur de cédéroms, un lecteur de disques DVD ou une unité d'entrée de données sous forme électronique.

10. Unité selon une des revendications 1 à 8, **caractérisée en ce que** le dispositif de lecture et de traitement (14) se présente sous la forme d'une station pour des jeux, des applications interactives ou des programmes éducatifs.

11. Unité selon une des revendications 1 à 10, **caractérisée en ce que** l'unité pour la transformation des signaux acoustiques (ASL, ASR) en phénomènes, en particulier en phénomènes perceptibles visuellement, est conçue pour manipuler des images et pour activer des objets essentiellement immobiles prévus dans les images, au moyen des signaux acoustiques (ASL, ASR), le dispositif pour la réalisation, en particulier pour la visualisation des phénomènes comprenant un écran (18) pour la présentation d'images graphiques et des objets activés prévus dans les images.

12. Unité selon une des revendications 1 à 10, **caractérisée en ce que** l'unité pour la transformation des signaux acoustiques (ASL, ASR) en phénomènes, en particulier en phénomènes perceptibles visuellement, est agencée pour modifier des états de synthétiseurs de musique, d'installation de commande de lumière ou d'orgues lumineuses dans des discothèques ou des jeux d'eau.

13. Procédé pour la transformation des signaux acoustiques (ASL, ASR) en phénomènes, en particulier en phénomènes perceptibles visuellement, en particulier dans une unité selon une des revendications 1 à 12, comprenant les étapes suivantes:
aa) réception des signaux acoustiques (ASL, ASR) dans un dispositif (12) pour la réception des signaux acoustiques (ASL, ASR) et pour le traitement desdits signaux acoustiques (ASL, ASR) reçus,
bb) numérisation des signaux acoustiques reçus à l'étape aa) dans un dispositif (36),
cc) décomposition des signaux de l'étape bb) dans un dispositif (38) pour la décomposition des signaux en composantes de fréquence (A, B, C, D, ..., X) sur un intervalle de temps et exploitation des signaux de l'étape bb) dans un dispositif (38a) en vue d'obtenir des valeurs d'amplitude (A', B', C', D', ..., X') sur un intervalle de temps,
dd) sélection et/ou association de composantes de fréquence (A, B, C, D, ..., X) et/ou de valeurs d'amplitude (A', B', C', D', ..., X') pour former des valeurs de combinaison (K1, K2, K3, K4, ..., Kx) en utilisant également des informations contenues sur un média-support (16).
ee) échantillonnage et transformation des valeurs de combinaison (K1, K2, K3, K4, ..., Kx) de l'étape dd) en des signaux (AE1, AE2, AE3, AE4, ..., AEx, AENull) correspondant à des phénomènes audio particuliers dans un dispositif (14) pour la lecture et le traitement des signaux (AE1, AE2, AE3, AE4, ..., AEx, AENull) en utilisant des informations du média-support (16),
ff) sélection et combinaison de signaux (AE1, AE2, AE3, AE4, ..., AEx, AENull) corresplondant à des phénomènes audio particuliers de l'étape ee) en utilisant les informations du média-support (16) pour obtenir des signaux (WE1, WE2, WE3, WE4, ..., WEx, WENull) correspondant à des phénomènes universels particuliers,
gg) association de signaux (WE1, WE2, WE3, WE4, ..., WEx, WENull) correspondant à des phénomènes universels particuliers de l'étape ff) avec des objets ou des phénomènes prédéterminés en utilisant les informations du média-support (16),
hh) activation des objets ou des phénomènes prédéterminés par exécution des signaux (WE1, WE2, WE3, WE4, ..., WEx, WENull) correspondant aux phénomènes universels particuliers de l'étape gg),
ii) modification de l'état correspondant des objets ou phénomènes activés et
jj) répétition des étapes hh) et ii) jusqu'à ce que tous les objets et phénomènes prédéterminés, définis pour un intervalle de temps particulier, soient activés et modifiés.

14. Procédé selon la revendication 13, **caractérisé en ce que** les valeurs de combinaison (K1, K2, K3, K4, ..., Kx) de l'étape dd) sont transmises au dispositif de lecture et de traitement (14) par le dispositif de réception et de traitement (12), en particulier après que le dispositif de réception et de traitement (12) a reçu un signal de réponse du dispositif de lecture et de traitement correspondant à un signal d'interrogation.

15. Procédé selon la revendication 13 ou 14, **caractérisé en ce que** les étapes aa) à cc) sont répétées pour les signaux acoustiques (ASL, ASR) suivants, après que les différentes valeurs de combinaison (K1, K2, K3, K4, ..., Kx) de l'étape dd) ont été transmises au dispositif de lecture et de traitement (14) par le dispositif de réception et de traitement (12).

16. Procédé selon la revendication 13 à 15, **caractérisé en ce qu'**au moins un signal (AENull) est produit, lorsqu'une valeur de combinaison (K1, K2, K3, K4, ..., Kx) de l'étape ee) ne peut pas être transformée en un signal (AE1, AE2, AE3, AE4, ..., AEx) correspondant à un phénomène audio déterminé.

17. Procédé selon la revendication 16, **caractérisé en ce qu'**au moins un signal (AENull) est associé à un évènement audio prédéterminé.

18. Procédé selon la revendication 16 ou 17, **caractérisé en ce que** les signaux (AE1, AE2, AE3, AE4, ..., AEx) correspondant à un phénomène audio déterminé et le signal (AENull) au nombre d'au moins un de l'étape ee) sont ordonnés en une suite et traités les uns après les autres.

19. Procédé selon la revendication 13 à 18, **caractérisé en ce que** les signaux (WE1, WE2, WE3, WE4, ..., WEx) obtenus de l'étape ff), correspondant à des évènements extérieurs déterminés, sont ordonnés en une suite et traités les uns à la suite des autres.

20. Procédé selon la revendication 13 à 19, **caractérisé en ce que** sur la base des signaux (WE1, WE2, WE3, WE4, ..., WEx), correspondant aux évènements extérieurs déterminés, des mouvements prédéterminés de translation et/ou de rotation de l'objet, l'agencement de la forme, de la surface, de la couleur, de la lumière de l'objet et de l'environnement de l'objet ainsi qu'une vue déterminée de l'objet sont sélectionnés.

21. Procédé selon la revendication 20, **caractérisé en ce qu'**au moins un objet est sélectionné de manière stochastique ou prédéterminée, lequel objet peut être impliqué dans des actions par l'un des signaux (WE1, WE2, WE3, WE4, ..., WEx), correspondant à des évènements extérieurs déterminés, lorsqu'aucun autre objet activable n'est présent.

22. Procédé selon la revendication 20 ou 21, **caractérisé en ce que** les déplacements sélectionnés de l'objet en translation et/ou en rotation, l'agencement de la forme, de la surface, de la couleur, de la lumière de l'objet et de l'environnement de l'objet ainsi que la vue déterminée de l'objet sont calculés à partir des informations du média-support (16) ou des informations de l'état réel pour obtenir des informations sur un état de consigne puis sont mémorisées comme information de départ d'un nouvel état réel par le dispositif de lecture et de traitement (14).

23. Procédé selon une des revendications 13 à 22, **caractérisé en ce qu'**à l'aide des signaux acoustiques (ASL, ASR), des images sont agencées graphiquement et des objets essentiellement immobiles prévus dans les images sont activés, comportant les étapes suivantes consécutives aux étapes aa) à ff):
1) association de certains signaux (WE1, WE2, WE3, WE4, ..., Wex) correspondant à des phénomènes extérieurs de l'étape ff) à des objets prédéterminés, essentiellement immobiles, prévus dans les images, en utilisant les informations du média-support (16),
2) agencement des images et activation des objets prédéterminés, essentiellement immobiles, par application des signaux (WE1, WE2, WE3, WE4, ..., Wex), correspondant aux phénomènes extérieurs déterminés,
3) représentation des images et activation des objets sur un écran (18) ou similaire, et
4) répétition des étapes 2) et 3) jusqu'à ce que toutes les images prédéterminées soient agencées et tous les objets activés pour un intervalle déterminé.

24. Procédé selon une des revendications 13 à 23, **caractérisé en ce qu'**à l'aide des signaux acoustiques (ASL, ASR), on modifie des états de synthétiseurs de musique, d'installations de commande de lumière ou d'orgues lumineuses de discothèque ou de jeux d'eau.
